# EUROPEAN PATENT APPLICATION

(11) **EP 3 557 160 A1**
(43) Date of publication of application: **23.10.2019**
(21) Application number: 17842378.6
(22) Date of filing: 18.12.2017
(51) Int. Cl.: F25B 21/00

(54) **HEAT EXCHANGER AND MAGNETIC HEAT PUMP DEVICE**

(30) Priority: 19.12.2016 JP 2016245423; 19.12.2016 JP 2016245428; 19.12.2016 JP 2016245435
(71) Applicant: Fujikura Ltd., Tokyo 135-8512 (JP)
(72) Inventor: KONDO, Masahiro, Sakura-shi Chiba 285-8550 (JP); ISHIKAWA, Kohki, Sakura-shi Chiba 285-8550 (JP); TAKEUCHI, Katsuhiko, Sakura-shi Chiba 285-8550 (JP); KIZAKI, Takeshi, Sakura-shi Chiba 285-8550 (JP); NOMURA, Ryujiro, Sakura-shi Chiba 285-8550 (JP)
(74) Representative: Ter Meer Steinmeister & Partner
(86) International application number: PCT/JP2017/045350
(87) International publication number: WO 2018/117030

(57) **Abstract**

A heat exchanger 10 to be used in a magnetic heat pump device includes: an assembly 11 which is formed by bundling wires 12; a case 13 which accommodates the assembly 11 and is provided with at least one cutout 145 or 146; and a filling portion 16 which is filled in the cutout 145 or 146, in which the wire 12 is formed of a magnetocaloric material having a magnetocaloric effect and the filling portion 16 is in close contact with an outer periphery of the assembly 11.

## Description

### TECHNICAL FIELD

The present invention relates to a heat exchanger to be used in a magnetic heat pump device utilizing a magnetocaloric effect and a magnetic heat pump device including the heat exchanger.

For designated countries that are permitted to be incorporated by reference in the literature, the contents described in Japanese Patent Application No. 2016-245423 filed in Japan on December 19, 2016, Japanese Patent Application No. 2016-245428 filed in Japan on December 19, 2016, and Japanese Patent Application No. 2016-245435 filed in Japan on December 19, 2016 are incorporated herein by reference and are regarded as a part of the description of this specification.

### BACKGROUND ART

There is known a heat exchanger including: an assembly obtained by overlapping a plurality of columnar magnetic bodies in a direction intersecting its longitudinal direction; and a cylindrical case having the assembly inserted thereinto (for example, see Patent Document 1).

### CITATION LIST

### PATENT DOCUMENT

Patent Document 1: JP 2013-64588 A

### SUMMARY OF THE INVENTION

### PROBLEM TO BE SOLVED BY THE INVENTION

In the above-described heat exchanger, a gap is formed between a magnetic bodies located at the outermost periphery of the assembly and the inner peripheral surface of the case. For that reason, since a large amount of a liquid medium flows into the gap, and the amount of the liquid medium passing through a passage formed between the magnetic bodies is small, a problem arises in that a heat exchange efficiency is not high.

An object of the invention is to provide a heat exchanger capable of improving a heat exchange efficiency and a magnetic heat pump device including the heat exchanger.

### MEANS FOR SOLVING PROBLEM

[1] A heat exchanger according to the invention is a heat exchanger to be used in a magnetic heat pump device, the heat exchanger including: an assembly which is formed by bundling wires; a case which accommodates the assembly and is provided with at least one cutout; and a filling portion which is filled in the cutout, in which each of the wires is formed of a magnetocaloric material having a magnetocaloric effect, and the filling portion is in close contact with an outer periphery of the assembly.
[2] In the above-described invention, the case may include a pair of side portions, and the cutout may be formed at each of the side portions.
[3] In the above-described invention, the case may include a pair of connection portions connecting end portions of the pair of side portions, and the heat exchanger may include an elastic body which is interposed between at least one of the connection portions and the assembly and is in close contact with the outer periphery of the assembly.
[4] In the above-described invention, the case may include: a pair of side portions; and a pair of connection portion connecting end portions of the pair of side portions, and the cutout may be continuously formed in one of the side portions, one of the connection portions, and other of the side portions.
[5] In the above-described invention, the heat exchanger may include an elastic body which is interposed between other of the connection portions and the assembly and is in close contact with the outer periphery of the assembly.
[6] In the above-described invention, the elastic body may be provided in an entire area along a longitudinal direction of the case.
[7] A heat exchanger according to the invention is a heat exchanger to be used in a magnetic heat pump device, the heat exchanger including: an assembly which is formed by bundling wires; a case which accommodates the assembly and is shorter than the assembly; and a covering portion which covers a portion exposed from the case in the assembly, in which each of the wires is formed of a magnetocaloric material having a magnetocaloric effect, and the covering portion is in close contact with an outer periphery of the assembly.
[8] A heat exchanger according to the invention is a heat exchanger to be used in a magnetic heat pump device, the heat exchanger including: an assembly which is formed by bundling wires; a case which accommodates the assembly; and a blocking member which contacts an end surface of the case and overlaps a part of the assembly in an axial direction of the case, in which each of the wires is formed of a magnetocaloric material having a magnetocaloric effect, and the blocking member blocks at least a part of a gap formed between an inner surface of the case and an outer periphery of the assembly.
[9] In the above-described invention, the case may include a pair of side portions, and the blocking member may block at least a gap between the side portions and the outer periphery of the assembly.
[10] In the above-described invention, the blocking member may have an annular shape corresponding to a shape of an opening of an end portion of the case, and the blocking member may block a gap in an entire circumference of the inner surface of the case.
[11] In the above-described invention, the heat exchanger may include a terminal member attached to an end portion of the case, the blocking member may be formed of an elastic body, and the blocking member may be interposed between the terminal member and the case.
[12] A heat exchanger according to the invention is a heat exchanger to be used in a magnetic heat pump device, the heat exchanger including: an assembly which is formed by bundling wires; a case which accommodates the assembly; and a filling portion which is filled in at least a part of a gap formed between an outer periphery of the assembly and an inner surface of the case, in which each of the wires is formed of a magnetocaloric material having a magnetocaloric effect.
[13] In the above-described invention, the filling portion may be provided in at least one end portion of the case.
[14] In the above-described invention, the case may include a pair of side portions, and the filling portion may be filled in a gap between the outer periphery of the assembly and the side portions.
[15] In the above-described invention, the case may include a pair of connection portions connecting end portions of the pair of side portions, and the filling portion may be also filled in a gap between at least one of the connection portions and the outer periphery of the assembly.
[16] In the above-described invention, the filling portion may be filled in a gap in an entire circumference of the inner surface of the case.
[17] In the above-described invention, the case may include a pair of connection portions connecting end portions of the pair of side portions, and the heat exchanger may include an elastic body which is interposed between at least one of the connection portions and the assembly and is in close contact with the outer periphery of the assembly.
[18] In the above-described invention, the elastic body may be interposed between one of the connection portions and the assembly, and the filling portion may be also filled in a gap between other of the connection portions and the outer periphery of the assembly.
[19] In the above-described invention, the elastic body may be provided in an entire area along a longitudinal direction of the case.
[20] In the above-described invention, the case may include: a first opening located at one end portion; and a second opening located at the other end portion, and a direction from the first opening toward the second opening may substantially match an extending direction of the assembly.
[21] A magnetic heat pump device according to the invention is a magnetic heat pump device comprising: at least one of the above-described heat exchangers; a magnetic field changer configured to apply a magnetic field to the magnetocaloric material and change the magnitude of the magnetic field; first and second external heat exchangers respectively connected to the heat exchanger through a pipe; and a fluid supplier configured to supply a fluid from the heat exchanger to the first or second external heat exchanger in synchronization with the operation of the magnetic field changer.

### EFFECT OF THE INVENTION

According to the invention, since the covering portion or the filling portion filled in the cutout is in close contact with the outer periphery of the assembly, a large amount of the liquid medium can pass through the passage formed between the wires of the assembly, and thus the heat exchange efficiency can be improved.

Further, according to the invention, since at least a part of the gap formed between the inner surface of the case and the outer periphery of the assembly is blocked by the blocking member, a large amount of the liquid medium can pass through the passage formed between the wires of the assembly, and thus the heat exchange efficiency can be improved.

Further, according to the invention, since the filling portion is filled in at least a part of the gap formed between the outer periphery of the assembly and the inner surface of the case, a large amount of the liquid medium can pass through the passage formed between the wires of the assembly, and thus the heat exchange efficiency can be improved.

### BRIEF DESCRIPTION OF DRAWINGS

Fig. 1 is a diagram showing an overall configuration of a magnetic heat pump device in a first embodiment of the invention and is a diagram showing a state where a piston is located at a first position;
Fig. 2 is a diagram showing an overall configuration of the magnetic heat pump device in the first embodiment of the invention and is a diagram showing a state where the piston is located at a second position;
Fig. 3 is an exploded perspective view showing a configuration of a MCM heat exchanger of the first embodiment of the invention;
Fig. 4 is a cross-sectional view showing the MCM heat exchanger of the first embodiment of the invention and is a cross-sectional view in which the MCM heat exchanger is cut along the longitudinal direction;
Fig. 5 is a cross-sectional view taken along a line V-V of Fig. 4;
Fig. 6 is a cross-sectional view taken along a line VI-VI of Fig. 4;
Figs. 7(a) to 7(c) are diagrams showing modified examples of a cross-sectional shape of a case of the first embodiment of the invention;
Fig. 8A is a cross-sectional view showing a MCM heat exchanger of a second embodiment of the invention and is a cross-sectional view in which the MCM heat exchanger is cut along the longitudinal direction;
Fig. 8B is a cross-sectional view taken along a line VIIIB-VIIIB of Fig. 8A;
Fig. 9 is a cross-sectional view showing a MCM heat exchanger of a third embodiment of the invention and is a cross-sectional view in which the MCM heat exchanger is cut along the width direction;
Fig. 10A is an exploded perspective view showing a configuration of a MCM heat exchanger of a fourth embodiment of the invention;
Fig. 10B is a cross-sectional view showing the MCM heat exchanger of the fourth embodiment of the invention and is a cross-sectional view in which the MCM heat exchanger is cut along the longitudinal direction;
Fig. 10C is a cross-sectional view taken along a line XC-XC of Fig. 10B;
Fig. 11 is a cross-sectional view showing a MCM heat exchanger of a fifth embodiment of the invention and is a cross-sectional view in which the MCM heat exchanger is cut along the width direction;
Fig. 12A is a cross-sectional view showing a MCM heat exchanger of a sixth embodiment of the invention and is a cross-sectional view in which the MCM heat exchanger is cut along the longitudinal direction;
Fig. 12B is a cross-sectional view taken alone a line XIIB-XIIB of Fig. 12A;
Fig. 13 is an exploded perspective view showing a configuration of a MCM heat exchanger of a seventh embodiment of the invention;
Fig. 14 is a cross-sectional view showing the MCM heat exchanger of the seventh embodiment of the invention and is a cross-sectional view in which the MCM heat exchanger is cut along the longitudinal direction;
Fig. 15 is a cross-sectional view taken alone a line XV-XV of Fig. 14;
Fig. 16 is an exploded perspective view showing a configuration of a MCM heat exchanger of an eighth embodiment of the invention;
Fig. 17 is a cross-sectional view showing the MCM heat exchanger of the eighth embodiment of the invention and is a cross-sectional view in which the MCM heat exchanger is cut along the longitudinal direction;
Fig. 18 is a cross-sectional view taken along a line XVIII-XVIII of Fig. 17;
Fig. 19 is a cross-sectional view showing a MCM heat exchanger of a ninth embodiment of the invention and is a cross-sectional view in which the MCM heat exchanger is cut along the longitudinal direction;
Fig. 20 is a cross-sectional view taken along a line XX-XX of Fig. 19;
Fig. 21 is a cross-sectional view taken along a line XXI-XXI of Fig. 19;
Fig. 22 is a cross-sectional view showing a modified example of the MCM heat exchanger of the ninth embodiment of the invention and is a cross-sectional view in which the MCM heat exchanger is cut along the width direction;
Fig. 23 is a cross-sectional view showing another modified example of the MCM heat exchanger of the ninth embodiment of the invention and is a cross-sectional view in which the MCM heat exchanger is cut along the width direction;
Fig. 24 is a cross-sectional view showing still another modified example of the MCM heat exchanger of the ninth embodiment of the invention and is a cross-sectional view in which the MCM heat exchanger is cut along the longitudinal direction;
Fig. 25 is a cross-sectional view showing a MCM heat exchanger of a tenth embodiment of the invention and is a cross-sectional view in which the MCM heat exchanger is cut along the longitudinal direction;
Fig. 26 is a cross-sectional view taken along a line XXVI-XXVI of Fig. 25;
Fig. 27 is a cross-sectional view showing a modified example of the MCM heat exchanger of the tenth embodiment of the invention and is a cross-sectional view in which the MCM heat exchanger is cut along the width direction; and
Fig. 28 is a cross-sectional view showing another modified example of the MCM heat exchanger of the tenth embodiment of the invention and is a cross-sectional view in which the MCM heat exchanger is cut along the width direction.

### MODE(S) FOR CARRYING OUT THE INVENTION

Hereinafter, an embodiment of the invention will be described with reference to the drawings.

### <<First embodiment>>

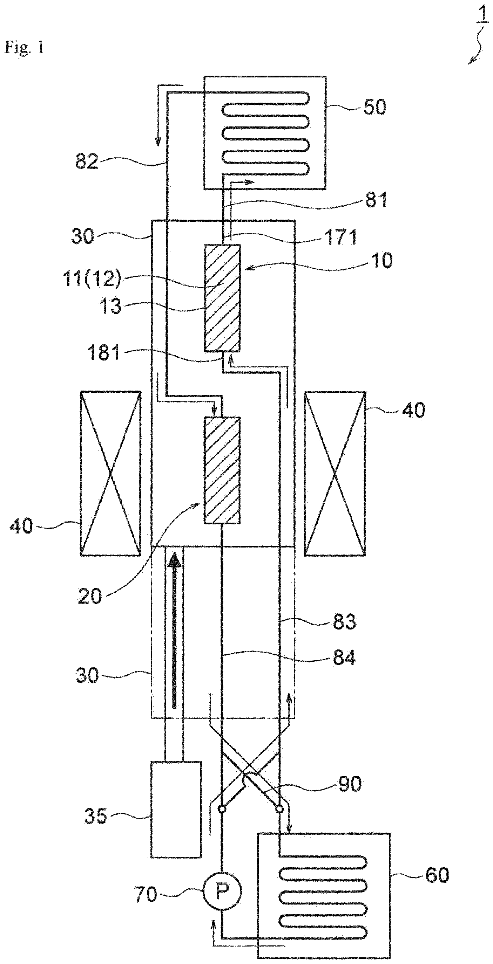

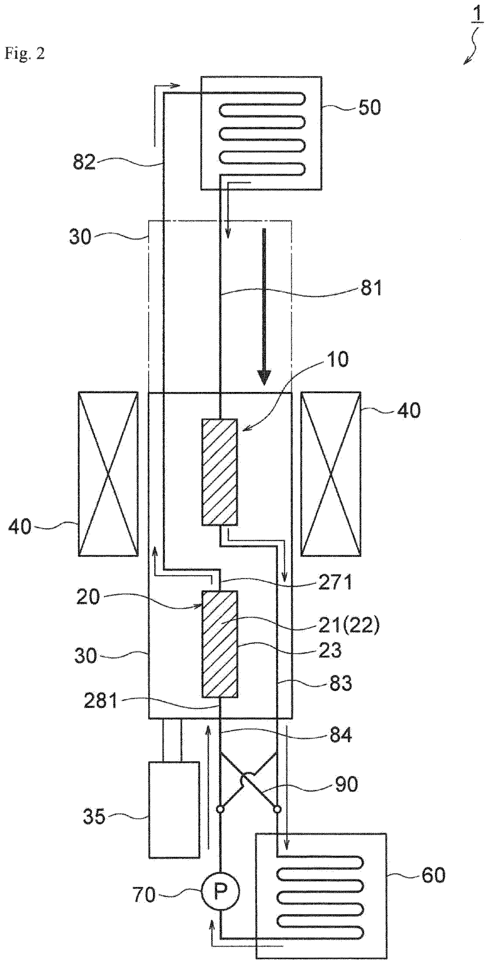

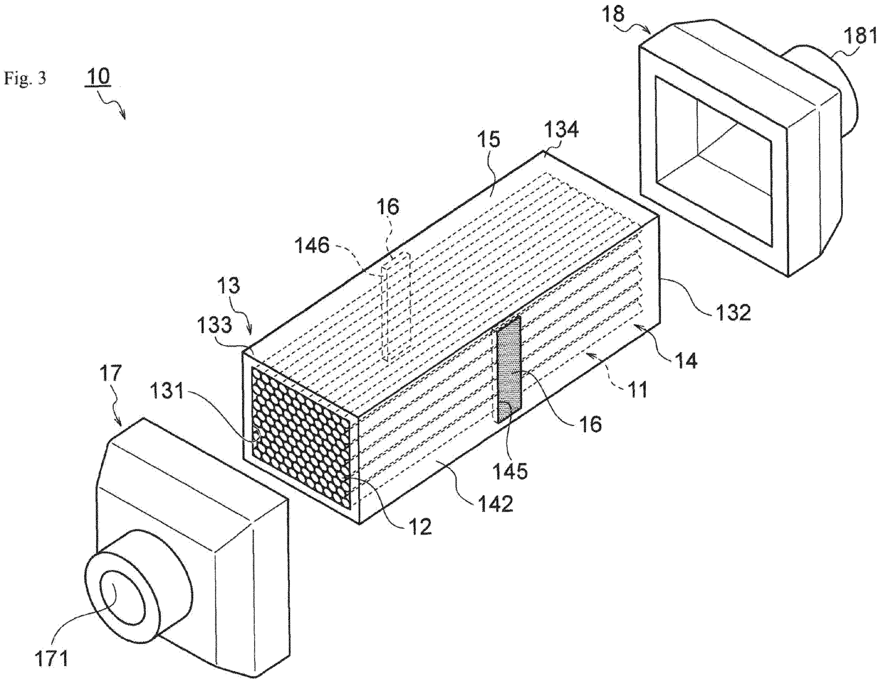

Figs. 1 and 2 are diagrams showing an overall configuration of a magnetic heat pump device of a first embodiment of the invention, and Figs. 3 to 6 are diagrams showing a MCM heat exchanger of the first embodiment of the invention.

A magnetic heat pump device 1 of this embodiment is a heat pump device using a magnetocaloric effect and includes, as shown in Figs. 1 and 2, first and second MCM heat exchangers 10 and 20, a piston 30, a permanent magnet 40, a low temperature side heat exchanger 50, a high temperature side heat exchanger 60, a pump 70, pipes 81 to 84, and a switching valve 90.

The first and second MCM heat exchangers 10 and 20 of this embodiment correspond to an example of the heat exchanger of the invention, the piston 30 and the permanent magnet 40 of this embodiment correspond to an example of a magnetic changer of the invention, the low temperature side heat exchanger 50 and the high temperature side heat exchanger 60 correspond to an example of first and second external heat exchangers of the invention, the pipes 81 to 84 of this embodiment correspond to an example of a pipe of the invention, and the pump 70 and the switching valve 90 of this embodiment correspond to an example of a fluid supplier of the invention.

A first MCM heat exchanger 10 includes, as shown in Figs. 3 to 6, an assembly 11 which is formed by a plurality of wires 12, a tubular case (container) 13 which accommodates the assembly 11, and terminal members 17 and 18 which are connected to both ends of the case 13. Since the first MCM heat exchanger 10 and the second MCM heat exchanger 20 have the same structure, only the configuration of the first MCM heat exchanger 10 will be described below and a description of the configuration of the second MCM heat exchanger 20 will be omitted.

The wire 12 of this embodiment corresponds to an example of the wire of the invention, the assembly 11 of this embodiment corresponds to an example of the assembly of the invention, and the case 13 of this embodiment corresponds to an example of the case of the invention.

The wire 12 is composed of a magnetocaloric material (MCM) having a magnetocaloric effect. When a magnetic field is applied to the wire 12 formed of the MCM, magnetic entropy decreases as electron spins are aligned and the wire 12 generates heat so that a temperature rises. On the other hand, when the magnetic field is removed from the wire 12, the electron spins become cluttered, the magnetic entropy increases, and the wire 12 absorbs heat so that a temperature falls.

The MCM of which the wire 12 is composed not particularly limited as long as the MCM is a magnetic body. However, for example, a magnetic body having a Curie temperature (Curie point) in a normal temperature range of about 10°C to 30°C and exhibiting a high magnetocaloric effect in the normal temperature range is desirable. Specific examples of such MCMs include gadolinium (Gd), gadolinium alloy, lanthanum-iron-silicon (La-Fe-Si) based compounds, and the like.

The wire 12 of this embodiment is a wire having a circular cross-sectional shape. When a first passage 111 (to be described later) can be formed between the wires 12 at the time of bundling the wires 12, the wire 12 may have a cross-sectional shape other than the circular cross-sectional shape. The wire diameter of the wire 12 is not particularly limited, but for example, 0.01 to 1 mm is desirable. As the plurality of wires 12 constituting the assembly 11, wires having substantially the same wire diameter may be used or wires having different wire diameters may be used.

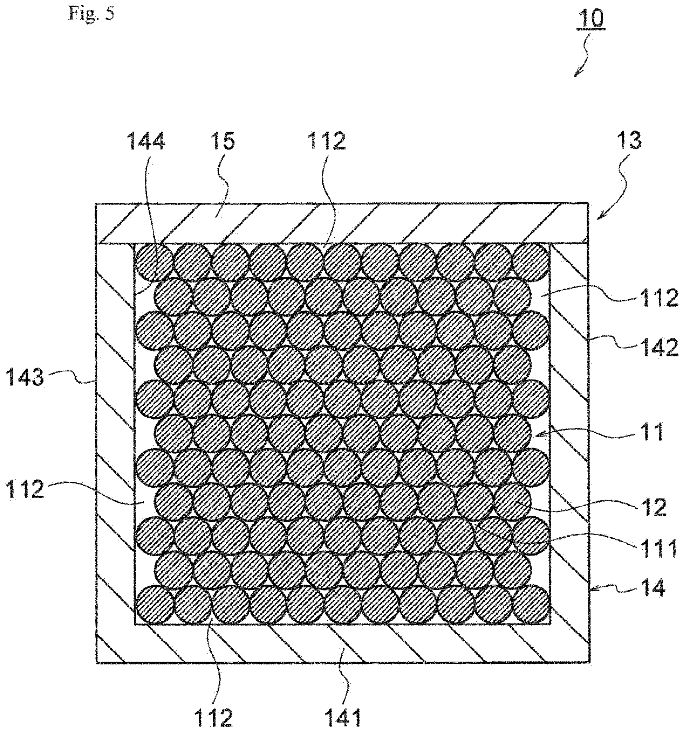

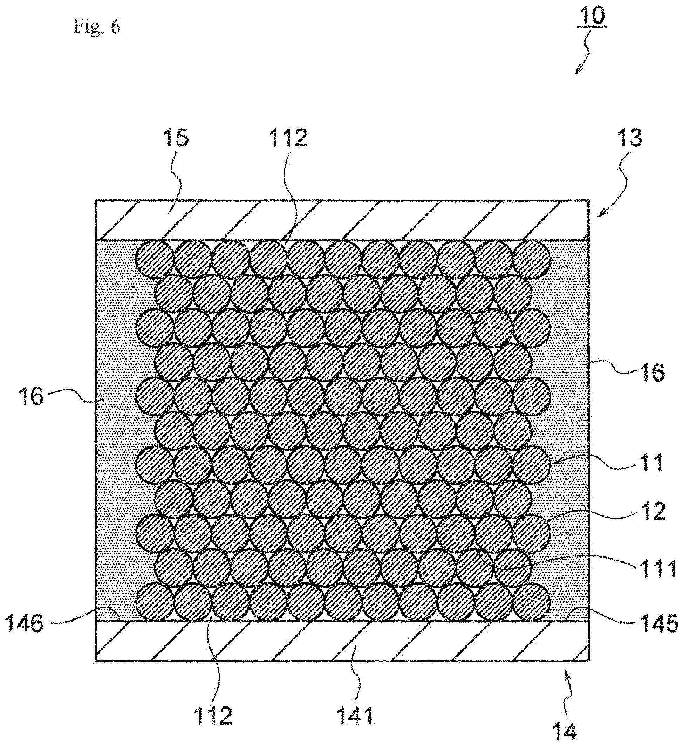

The assembly 11 is formed by bundling a plurality of the wires 12. The plurality of wires 12 are bundled (overlapped) in a direction intersecting the longitudinal direction of the wire 12. In other words, the plurality of wires 12 are adjacent to each other so that the side surfaces of the wires 12 contact each other. As a result, a first passage 111 (see Figs. 5 and 6) is formed between the side surfaces of the wires 12. In order to facilitate understanding, the assembly 11 is formed by the wires 12 which are fewer than the actual wires in Figs. 3 to 6, but in fact, the assembly 11 includes several thousand to several tens of thousands of wires 12.

The assembly 11 shown in Figs. 3 to 6 is formed by simply bundling the plurality of wires 12, but the configuration of the assembly is not particularly limited thereto. Although not specifically shown, for example, the assembly may be formed by twisting a plurality of wires together. Alternatively, an individual stranded wire may be formed by twisting several wires and the assembly may be formed by bundling the plurality of stranded wires. That is, the "assembly formed by bundling the plurality of wires" in this embodiment also includes "stranded wires."

As a method of twisting the wires, for example, collective twisting, concentric twisting, complex twisting, and the like can be exemplified. The collective twisting is a twisting method in which a plurality of wires are bundled together and twisted in the same direction about the axis of the assembly. The concentric twisting is a twisting method in which a plurality of wires are concentrically twisted around a core wire. The complex twisting is a twisting method in which child stranded wires each of which is obtained by twisting a plurality of wires by concentric twisting or collective twisting are further twisted by concentric twisting or collective twisting.

The case 13 which accommodates the assembly 11 includes, as shown in Figs. 3 to 6, an accommodation portion 14 and a lid portion 15 and has a tubular shape with a rectangular cross-section. The case 13 is formed such that one end portion (a first end portion) 133 is provided with a first opening 131 and the other end portion (a second end portion) 134 is provided with a second opening 132.

The accommodation portion 14 includes a bottom portion 141 which constitutes a bottom plate of the case 13, and a pair of side portions 142 and 143 which constitutes both side walls of the case 13. An opening 144 is formed between upper ends of the pair of side portions 142 and 143. As a result, the accommodation portion 14 has a square-cornered U-shaped (substantially U-shaped) cross-sectional shape in a cross-section along a direction substantially orthogonal to the axial direction thereof.

The lid portion 15 is a rectangular plate-shaped member. As shown in Figs. 3 to 6, the lid portion 15 is fixed to upper ends of the pair of side portions 142 and 143. The opening 144 of the accommodation portion 14 is blocked by the lid portion 15 so that the case 13 is formed.

The pair of side portions 142 and 143 of this embodiment corresponds to an example of a pair of side portions of the invention, the lid portion 15 of this embodiment corresponds to an example of one of connection portions of the invention, and the bottom portion 141 of this embodiment corresponds to an example of other of connection portions of the invention. Further, the first opening 131 of the case 13 of this embodiment corresponds to an example of a first opening of the case of the invention and the second opening 132 of the case 13 of this embodiment corresponds to an example of a second opening of the case of the invention.

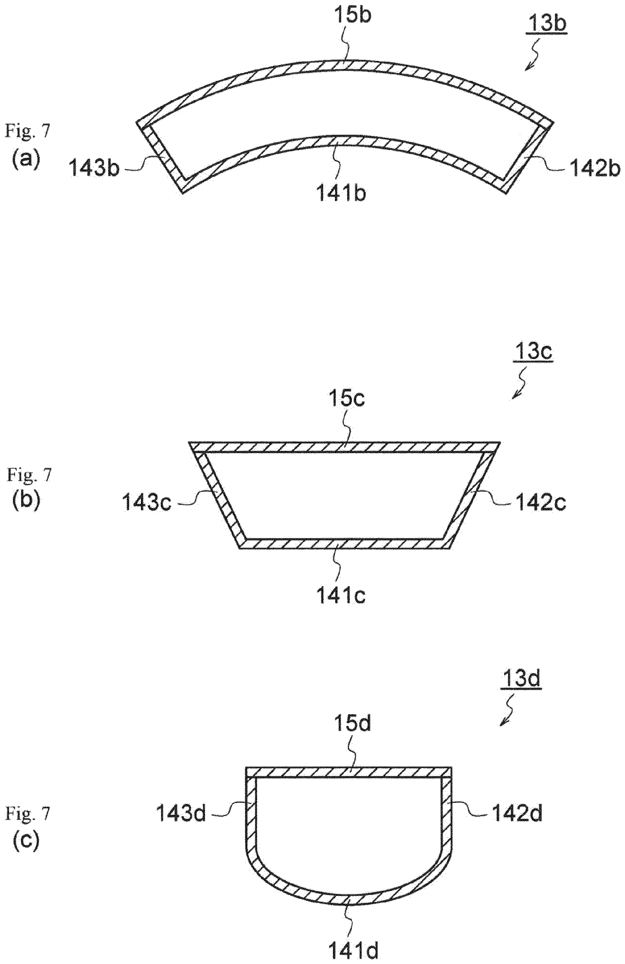

The shape of the case 13 is not particularly limited to the above-described shape as long as the shape is a tubular shape, and the case may have, for example, a cross-sectional shape shown in Figs. 7(a) to 7(c). Figs. 7(a) to 7(c) are diagrams showing modified examples of the cross-sectional shape of the case of the MCM heat exchanger. The assembly 11 is not shown in Figs. 7(a) to 7(c).

For example, as shown in Fig. 7(a), a case 13b may have a fan-type cross-sectional shape including a circular-arc bottom portion 141b, a circular-arc lid portion 15b, and straight side portions 142b and 143b. The circular-arc bottom portion 141b and the circular-arc lid portion 15b extend in parallel to each other. One side portion 142b connects one end portion of the bottom portion 141b to one end portion of the lid portion 15b. Further, the other side portion 143b connects the other end portion of the bottom portion 141b to the other end portion of the lid portion 15b.

The pair of side portions 142b and 143b in this example (the example shown in Fig. 7(a)) corresponds to an example of a pair of side portions of the invention, the lid portion 15b of this example corresponds to an example of one of connection portions of the invention, and the bottom portion 141b of this example corresponds to an example of other of connection portions of the invention.

Alternatively, as shown in Fig. 7(b), the case 13c may have a trapezoidal cross-sectional shape including a straight bottom portion 141c, a straight lid portion 15c, and straight side portions 142c and 143c. The straight bottom portion 141c and the straight lid portion 15c which have different lengths extend in parallel to each other. One side portion 142c connects one end portion of the bottom portion 141c to one end portion of the lid portion 15c. Further, the other side portion 143c connects the other end portion of the bottom portion 141c to the other end portion of the lid portion 15c.

The pair of side portions 142c and 143c in this example (the example shown in Fig. 7(b)) corresponds to an example of a pair of side portions of the invention, the lid portion 15c of this example corresponds to an example of one of connection portions of the invention, and the bottom portion 141c of this example corresponds to an example of other of connection portions of the invention.

Alternatively, as shown in Fig. 7(c), the case 13d may have a substantially U-shaped cross-sectional shape including a circular-arc bottom portion 141d, a straight lid portion 15d, and straight side portions 142d and 143d. The straight side portions 142d and 143d extend in parallel to each other. The circular-arc bottom portion 141d connects one end portion of the side portion 142d to one end portion of the side portion 143d. Further, the straight lid portion 15d connects the other end portion of the side portion 142d to the other end portion of the side portion 143d.

The pair of side portions 142d and 143d in this example (the example shown in Fig. 7(c)) corresponds to an example of a pair of side portions of the invention, the lid portion 15d of this example corresponds to an example of one of connection portions of the invention, and the bottom portion 141d of this example corresponds to an example of other of connection portions of the invention.

Returning to Figs. 3 to 6, the assembly 11 is accommodated in the case 13 so that the longitudinal direction of the wire 12 constituting the assembly 11 (the extending direction (the longitudinal direction) of the assembly 11) substantially matches the axial direction of the case 13 (a direction from the first opening 131 toward the second opening 132). Further, the centers of the first and second openings 131 and 132 are located to be substantially coaxial to the center of the assembly 11. Then, the first passage 111 is formed between the wires 12 constituting the assembly 11 (see Figs. 5 and 6). Meanwhile, a second passage 112 is formed between the inner surface of the case 13 and the outermost peripheral side wires 12 of the assembly 11 (see Fig. 5).

Further, in this embodiment, as shown in Figs. 3, 4, and 6, cutouts 145 and 146 are respectively formed at the side portions 142 and 143 of the accommodation portion 14 of the case 13 in a part of the case 13 in the longitudinal direction.

The one cutout 145 is a slit (an opening) formed at one side portion 142 of the accommodation portion 14. The cutout 145 has a substantially rectangular shape extending in the circumferential direction of the case 13 and is located at the substantially center of one side portion 142 in the longitudinal direction. The cutout 145 penetrates the side portion 142 of the accommodation portion 14 in the thickness direction, and one side surface of the outer periphery of the assembly 11 is exposed from the case 13 through the cutout 145.

The other cutout 146 is also a slit (an opening) which is formed at the other side portion 143 of the accommodation portion 14. The cutout 146 has a substantially rectangular shape extending in the circumferential direction of the case 13 and is disposed at the substantially center of the other side portion 143 in the longitudinal direction. The cutout 146 penetrates the side portion 143 of the accommodation portion 14 in the thickness direction, and the other side surface of the outer periphery of the assembly 11 is opened from the case 13 through the cutout 146.

Further, in this embodiment, a filling portion 16 is filled into the cutouts 145 and 146 formed at the side portions 142 and 143 of the case 13, and the cutouts 145 and 146 are blocked by the filling portion 16. Further, the filling portion 16 is in close contact with the side surface of the outer periphery of the assembly 11, and the second passage 112 formed between the inner surface of the case 13 and the wires 12 at the outermost peripheral side of the assembly 11 is blocked by the filling portion 16 (see Fig. 6). The filling portion 16 is formed by injecting a resin material such as an adhesive into the cutouts 145 and 146 and curing the resin material.

Here, when a granular MCM is used instead of the wire 12, the MCM flows out from the cutouts 145 and 146 and hence the workability of filling the cutouts 145 and 146 with an adhesive is noticeably deteriorated. On the contrary, in this embodiment, since the wire 12 is used as the MCM, the cutouts 145 and 146 are easily filled with the adhesive. Further, in this embodiment, since the wire 12 is used as the MCM, it is possible to increase the resistance of the second passage 112 just by filling the cutouts 145 and 146 with the filling portion 16.

The positions of the cutouts 145 and 146 formed in the side portions 142 and 143 of the case 13 are not particularly limited to the center of the case 13 in the longitudinal direction as described above. For example, although particularly not shown in the drawings, the cutouts 145 and 146 may be formed at the end portions of the side portions 142 and 143 of the case 13.

Further, the shapes of the cutouts 145 and 146 are also not particularly limited to the strip shape (rectangular shape) as described above.

Further, the size of the cutouts 145 and 146 are not also particularly limited to the above-described examples. In the above-described example, each of the cutouts 145 and 146 has a size in which the entire area of the side surface of the outer periphery of the assembly 11 along the height direction thereof is exposed. On the contrary, each of the cutouts 145 and 146 may have a size in which only a part of the side surface of the outer periphery of the assembly 11 along the height direction of the side surface is exposed.

Further, the number of each of the cutouts 145 and 146 formed in the side portions 142 and 143 is also not particularly limited. For example, although particularly not shown in the drawings, the side portions 142 and 143 may be provided with a plurality of the cutouts 145 and 146. Further, the number of the cutouts 145 formed at one side portion 142 and the number of the cutouts 146 formed at the other side portion 143 may be different from each other. Alternatively, the cutouts 145 and 146 may be formed only at one of the side portions 142 and 143.

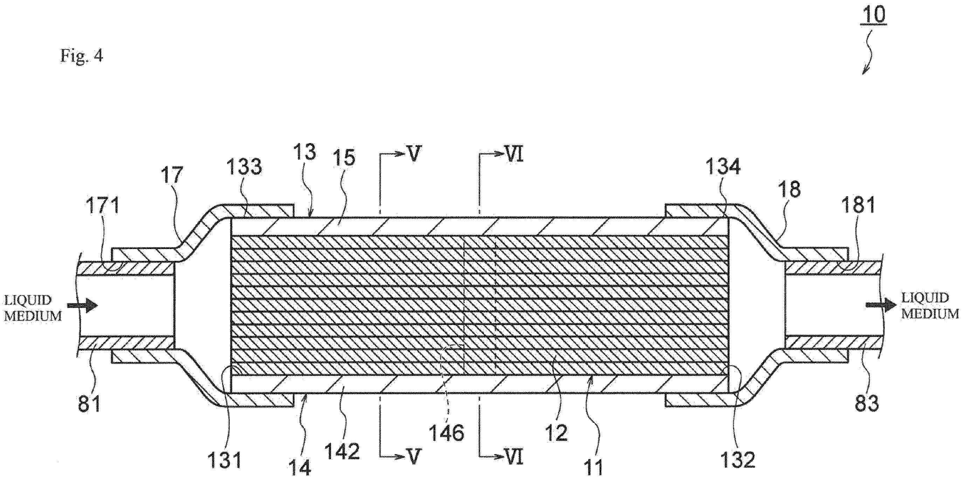

As shown in Figs. 3 and 4, one end portion 133 of the case 13 is inserted into the first terminal member 17, and the first terminal member 17 is fixed to the case 13. Further, the other end portion 134 of the case 13 is inserted into the second terminal member 18, and the second terminal member 18 is fixed to the case 13. As the first and second terminal members (connection members) 17 and 18, for example, a heat shrinkable tube, a resin molded article, a metal processed article, or the like can be used.

The first terminal member 17 includes a first connection port 171 which is smaller than the first opening 131 of the case 13. As shown in Fig. 1, the first connection port 171 communicates with the low temperature side heat exchanger 50 through the first low temperature side pipe 81. The second terminal member 18 also includes a second connection port 181 which is smaller than the second opening 132. The second connection port 181 communicates with the high temperature side heat exchanger 60 through the first high temperature side pipe 83. The centers of the first and second connection ports 171 and 181 are located to be coaxial to the center of the assembly 11.

Similarly, an assembly 21 is also accommodated in the case 23 of the second MCM heat exchanger 20 (see Fig. 2), and the assembly 21 is formed by bundling a plurality of wires 22. Then, similarly to the first MCM heat exchanger 10, one end portion of the case 23 is inserted into the first terminal member, and the first terminal member is fixed to the case 23. Further, the other end portion of the case 23 is inserted into the second terminal member, and the second terminal member is fixed to the case 23. The second MCM heat exchanger 20 communicates with the low temperature side heat exchanger 50 through the second low temperature side pipe 82 connected to a first connection port 271 of the first terminal member. Meanwhile, the second MCM heat exchanger 20 communicates with the high temperature side heat exchanger 60 through the second high temperature side pipe 84 connected to a second connection port 281 of the second terminal member.

The wire 22 of the second MCM heat exchanger 20 has the same configuration as that of the wire 12 of the first MCM heat exchanger 10. Further, the case 23 of the second MCM heat exchanger 20 also has the same configuration as that of the case 13 of the first MCM heat exchanger 10, and the filling portion is filled into the cutout formed in the case 23. Furthermore, a terminal member of the second MCM heat exchanger 20 also has the same configuration as those of the terminal members 17 and 18 of the first MCM heat exchanger 10.

For example, in a case where an air conditioner using the magnetic heat pump device 1 of this embodiment is operated in a cooling mode, an indoor place is cooled by a heat exchange between the low temperature side heat exchanger 50 and the inside air, and heat is emitted to an outdoor place by a heat exchange between the high temperature side heat exchanger 60 and the outside air.

On the contrary, in a case where the air conditioner is operated in a warming mode, the indoor place is warmed by a heat exchange between the high temperature side heat exchanger 60 and the inside air, and heat is absorbed from the outdoor place by a heat exchange between the low temperature side heat exchanger 50 and the outside air.

As described above, a circulation path including four heat exchangers 10, 20, 50, and 60 is formed by two low temperature side pipes 81 and 82 and two high temperature side pipes 83 and 84, and a liquid medium is pressure-fed in the circulation path by the pump 70. As a specified example of the liquid medium, for example, a liquid such as water, an antifreeze solution, an ethanol solution, or a mixture thereof can be exemplified. The liquid medium of this embodiment corresponds to an example of a fluid of the invention.

Two MCM heat exchangers 10 and 20 are accommodated inside the piston 30. The piston 30 can move in a reciprocating manner between a pair of permanent magnets 40 by the actuator 35. Specifically, the piston 30 can move in a reciprocating manner between a "first position" shown in Fig. 1 and a "second position" shown in Fig. 2. As an example of the actuator 35, for example, an air cylinder or the like can be exemplified.

Here, the "first position" is a position of the piston 30 when the first MCM heat exchanger 10 is not interposed between the permanent magnets 40 and the second MCM heat exchanger 20 is interposed between the permanent magnets 40. On the contrary, the "second position" is a position of the piston 30 when the first MCM heat exchanger 10 is interposed between the permanent magnets 40 and the second MCM heat exchanger 20 is not interposed between the permanent magnets 40.

Instead of the first and second MCM heat exchangers 10 and 20, the permanent magnet 40 may be moved in a reciprocating manner by the actuator 35. Alternatively, an electromagnet having a coil may be used instead of the permanent magnet 40. In this case, a mechanism of moving the MCM heat exchangers 10 and 20 or the magnet is not necessary. Further, when the electromagnet having the coil is used, the magnitude of the magnetic field applied to the wires 12 and 22 may be changed instead of applying/removing of the magnetic field with respect to the wires 12 and 22 of the MCM heat exchangers 10 and 20.

The switching valve 90 is provided at the first high temperature side pipe 83 and the second high temperature side pipe 84. In synchronization with the operation of the piston 30, the switching valve 90 can switch the liquid medium supply destination of the pump 70 to the first MCM heat exchanger 10 or the second MCM heat exchanger 20 and switch the connection destination of the high temperature side heat exchanger 60 to the second MCM heat exchanger 20 or the first MCM heat exchanger 10.

Next, an operation of the magnetic heat pump device 1 of this embodiment will be described with reference to Figs. 1 and 2.

First, when the piston 30 is moved to the "first position" shown in Fig. 1, the wire 12 of the first MCM heat exchanger 10 is demagnetized so that a temperature falls, and the wire 22 of the second MCM heat exchanger 20 is excited so that a temperature rises.

At the same time, a first path (the pump 70 → the first high temperature side pipe 83 → the first MCM heat exchanger 10 → the first low temperature side pipe 81 → the low temperature side heat exchanger 50 → the second low temperature side pipe 82 → the second MCM heat exchanger 20 → the second high temperature side pipe 84 → the high temperature side heat exchanger 60 → the pump 70) is formed by the switching valve 90.

For this reason, the liquid medium is cooled by the wire 12 of the first MCM heat exchanger 10 of which a temperature decreases due to a demagnetization, and the liquid medium is supplied to the low temperature side heat exchanger 50 so that the low temperature side heat exchanger 50 is cooled.

At this time, since the liquid medium passes through the passage 111 formed between the side surfaces of the wires 12 inside the first MCM heat exchanger 10 so as to contact the wires 12, the liquid medium is cooled by the wires 12. Meanwhile, since the second passage 112 between the side surface of the outer periphery of the assembly 11 and the side portions 142 and 143 of the case 13 is blocked by the filling portion 16 so that the resistance of the second passage 112 increases, the amount of the liquid medium flowing through the first passage 111 does not decrease.

Here, there is a case in which the assembly 11 is formed by overlapping the wires 12 inside the accommodation portion 14 of the case 13. In this case, since the wires 12 are aligned by the bottom portion 141 of the case 13 or the lid portion 15, the second passage 112 adjacent to the side portions 142 and 143 tends to be wider than the second passage 112 adjacent to the bottom portion 141 or the lid portion 15. On the contrary, in this embodiment, since the second passage 112 adjacent to the side portions 142 and 143 is blocked by the filling portion 16, the above-described effect can be efficiently obtained.

Meanwhile, the liquid medium is heated by the wire 22 of the second MCM heat exchanger 20 which is excited so that its temperature rises, and the liquid medium is supplied to the high temperature side heat exchanger 60 so that the high temperature side heat exchanger 60 is heated.

At this time, since the liquid medium passes through the first passage formed between the wires 22 and contacts the wires 22 inside the second MCM heat exchanger 20, the liquid medium is heated by the wire 22. Meanwhile, since the second passage formed between the side surface of the outer periphery of the assembly 21 and the side portion of the case 23 is blocked by the filling portion so that the resistance of the second passage increases, the amount of the liquid medium flowing through the first passage does not decrease.

Here, in a case where the assembly 21 is formed by the above-described method, the second passage adjacent to the side portion of the case 23 tends to be wider than the second passage adjacent to the bottom portion or the lid portion of the case 23. On the contrary, in this embodiment, since the second passage adjacent to the side portion of the case 23 is blocked by the filling portion, the above-described effect can be efficiently obtained.

Next, when the piston 30 is moved to the "second position" shown in Fig. 2, the wire 12 of the first MCM heat exchanger 10 is excited so that a temperature rises and the wire 22 of the second MCM heat exchanger 20 is demagnetized so that a temperature falls.

At the same time, a second path (the pump 70 → the second high temperature side pipe 84 → the second MCM heat exchanger 20 → the second low temperature side pipe 82 → the low temperature side heat exchanger 50 → the first low temperature side pipe 81 → the first MCM heat exchanger 10 → the first high temperature side pipe 83 → the high temperature side heat exchanger 60 → the pump 70) is formed by the switching valve 90.

For this reason, the liquid medium is cooled by the wire 22 of the second MCM heat exchanger 20 of which a temperature decreases due to a demagnetization, and the liquid medium is supplied to the low temperature side heat exchanger 50 so that the low temperature side heat exchanger 50 is cooled.

At this time, since the liquid medium passes through the first passage formed between the wires 22 and contacts the wires 22 inside the second MCM heat exchanger 20, the liquid medium is cooled by the wires 22. Meanwhile, since the second passage between the side surface of the outer periphery of the assembly 21 and the side portion of the case 23 is blocked by the filling portion so that the resistance of the second passage increases, the amount of the liquid medium flowing in the first passage does not decrease. Further, in a case in which the assembly 21 is formed by the above-described method, this effect can be efficiently obtained on the basis of the same reason as the above-described reason.

Meanwhile, the liquid medium is heated by the wire 12 of the first MCM heat exchanger 10 which is excited so that its temperature rises, and the liquid medium is supplied to the high temperature side heat exchanger 60 so that the high temperature side heat exchanger 60 is heated.

At this time, since the liquid medium passes through the first passage 111 formed between the wires 12 and contacts the wires 12 inside the first MCM heat exchanger 10, the liquid medium is heated by the wires 12. Meanwhile, since the second passage 112 between the side surface of the outer periphery of the assembly 11 and the side portions 142 and 143 of the case 13 is blocked by the filling portion 16 so that the resistance of the second passage 112 increases, the amount of the liquid medium flowing in the first passage 111 does not decrease. Further, in a case in which the assembly 11 is formed by the above-described method, this effect can be efficiently obtained on the basis of the same reason as the above-described reason.

Then, when applying and removing of the magnetic field with respect to the wires 12 and 22 inside the first and second MCM heat exchangers 10 and 20 are repeated by the repeated reciprocating movement of the piston 30 between the "first position" and the "second position", the cooling of the low temperature side heat exchanger 50 and the heating of the high temperature side heat exchanger 60 are continued.

As described above, in this embodiment, since the filling portion 16 filled in the cutouts 145 and 146 of the case 13 is in close contact with the outer periphery of the assembly 11 in the first MCM heat exchanger 10, the second passage 112 formed between the outer periphery of the assembly 11 and the inner surface of the case 13 is blocked by the filling portion 16 so that the resistance of the second passage 112 increases. For this reason, since a large amount of the liquid medium can pass through the first passage 111 formed between the wires 12 of the assembly 11, the heat exchange efficiency can be improved.

Similarly, although particularly not shown in the drawings, since the filling portion filled in the cutout of the case 23 is also in close contact with the outer periphery of the assembly 21 in the second MCM heat exchanger 20, the second passage formed between the outer periphery of the assembly 21 and the inner surface of the case 23 can be blocked by the filling portion and hence the resistance of the second passage increases. For this reason, since a large amount of the liquid medium can pass through the first passage formed between the wires 22 of the assembly 21, the heat exchange efficiency can be improved.

Further, in this embodiment, as for the first MCM heat exchanger 10, the longitudinal direction of the wire 12 constituting the assembly 11 (the extending direction of the assembly 11) substantially matches the axial direction of the case 13 (a direction from the first opening 131 toward the second opening 132 in the case 13). For this reason, in this embodiment, it is possible to suppress an increase in pressure loss of the liquid medium flowing in the MCM heat exchanger 10 and to increase the resistance of the second passage 112 just by filling the cutouts 145 and 146 with the filling portion 16.

Similarly, as for the second MCM heat exchanger 20 as well, the longitudinal direction of the wire 22 constituting the assembly 21 (the extending direction of the assembly 21) substantially matches the axial direction of the case 23 (a direction from the first opening toward the second opening in the case 23). For this reason, in this embodiment, it is possible to suppress an increase in pressure loss of the liquid medium flowing in the MCM heat exchanger 20 and to increase the resistance of the second passage just by filling the cutout with the filling portion.

### <<Second Embodiment>>

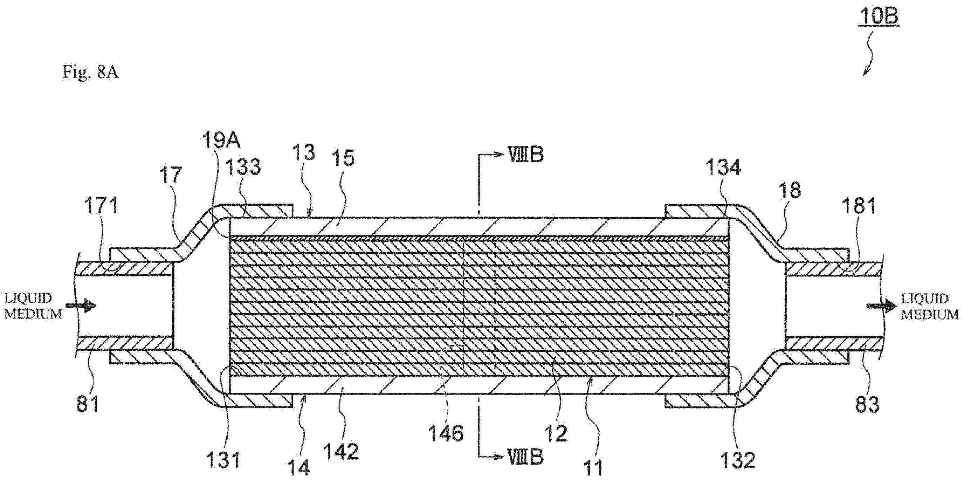

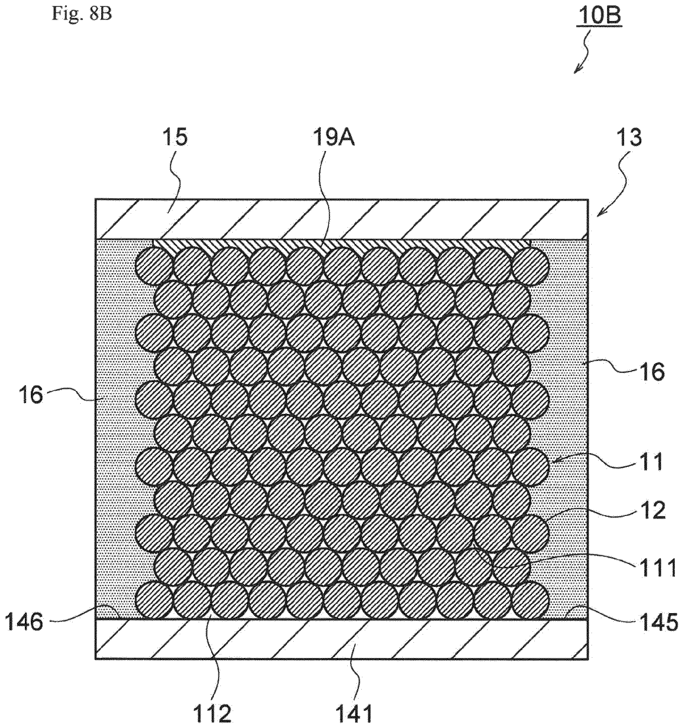

Figs. 8A and 8B are cross-sectional views showing a MCM heat exchanger of a second embodiment of the invention. This embodiment is different from the first embodiment in that the first and second MCM heat exchangers include an elastic body in addition to the filling portion, but the other configurations are the same as those of the first embodiment. Hereinafter, only the difference from the first embodiment will be described in the MCM heat exchanger of the second embodiment. Then, the same reference numerals will be given to the components having the same configurations as in the first embodiment and a description thereof will be omitted.

A first MCM heat exchanger 10B of this embodiment includes, as shown in Figs. 8A and 8B, an elastic body 19A interposed between the assembly 11 and the lid portion 15 of the case 13 in addition to the filling portion 16 filled in the cutouts 145 and 146. As a detailed example of such an elastic body 19A, for example, a sheet-like flexible urethane resin, rubber, or sponge can be exemplified. The elastic body 19A is deformed to follow the upper surface of the outer periphery of the assembly 11 and is in close contact with the entire upper surface of the outer periphery of the assembly 11. In this embodiment, since the second passage 112 on three sides is blocked in the assembly 11, the second passage 112 can be more reliably blocked.

Further, the elastic body 19A is formed in the entire area along the longitudinal direction of the case 13. For this reason, it is possible to suppress the partial floating of the wire 12.

### <<Third Embodiment>>

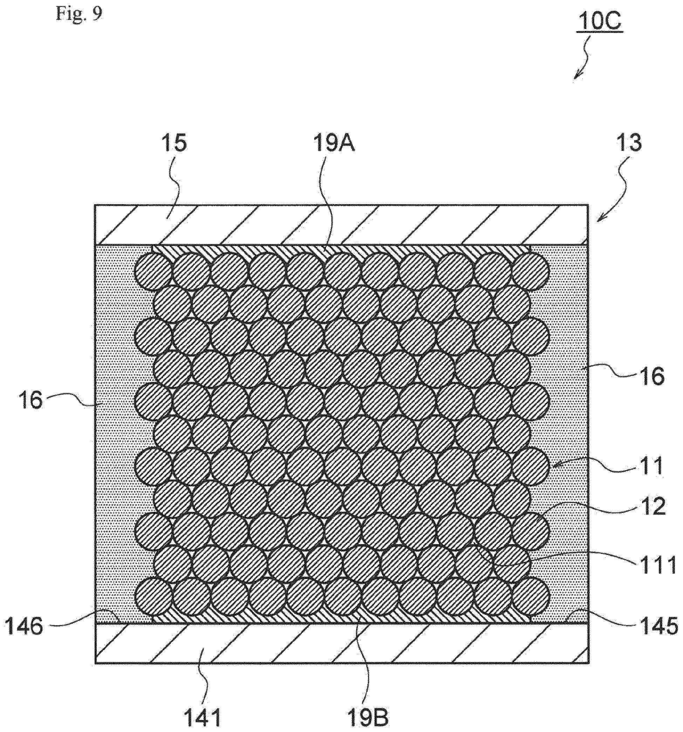

Fig. 9 is a cross-sectional view showing a MCM heat exchanger of a third embodiment of the invention. This embodiment is different from the second embodiment in that an elastic body is also interposed between the assembly and the bottom portion of the case, but the other configurations are the same as those of the second embodiment. Hereinafter, only the difference from the MCM heat exchanger of the second embodiment will be described in the MCM heat exchanger of the third embodiment. Then, the same reference numerals will be given to the components having the same configurations as in the second embodiment and a description thereof will be omitted.

A first MCM heat exchanger 10C of this embodiment further includes, as shown in Fig. 9, an elastic body 19B interposed between the bottom portion 141 of the case 13 and the assembly 11. As a detailed example of such an elastic body 19B, for example, a sheet-like flexible urethane resin, rubber, or sponge can be exemplified similarly to the elastic body 19A. The elastic body 19B is deformed to follow the lower surface of the outer periphery of the assembly 11 and is in close contact with the entire lower surface of the outer periphery of the assembly 11. In this embodiment, since the second passage 112 on four sides is blocked in the assembly 11, the second passage 112 can be more reliably blocked.

Further, although particularly not shown in the drawings, the elastic body 19B is formed in the entire area along the longitudinal direction of the case 13 similarly to the elastic body 19A. For this reason, it is possible to suppress the partial floating of the wire 12.

### <<Fourth Embodiment>>

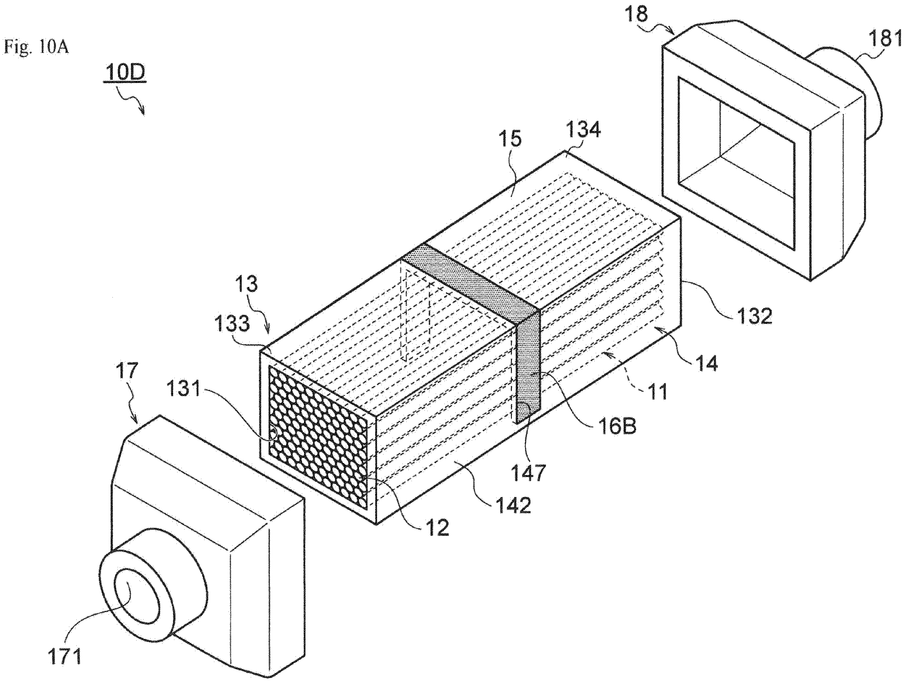

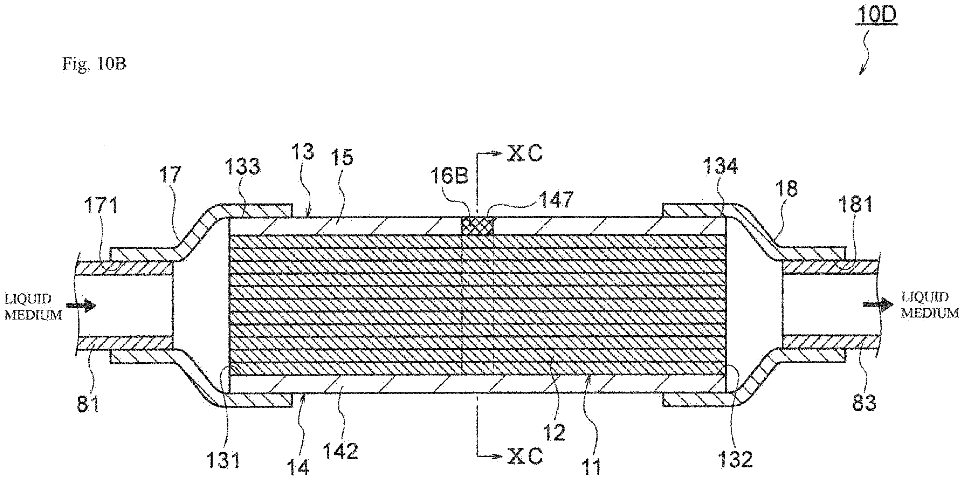

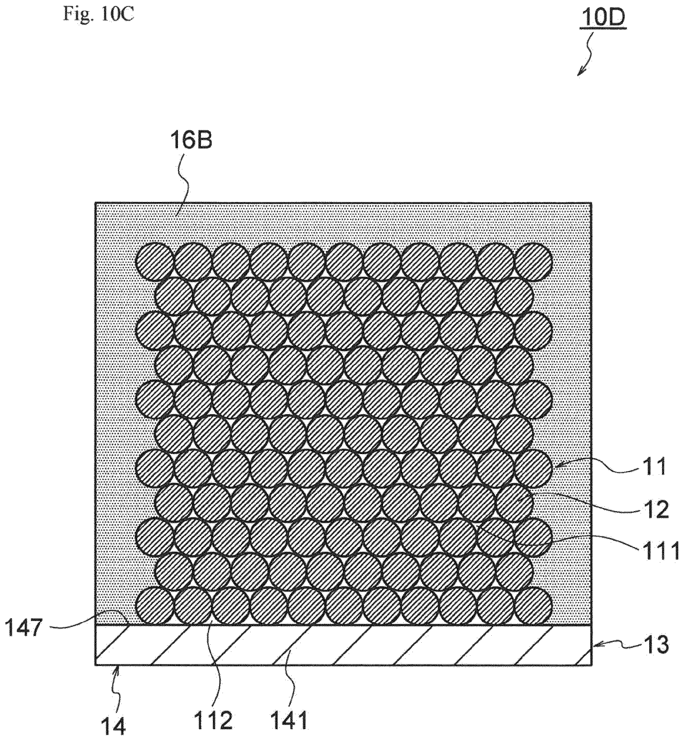

Figs. 10A to 10C are diagrams showing a MCM heat exchanger of a fourth embodiment of the invention. This embodiment is different from the first embodiment in that the cutout is also formed in the lid portion of the case, but the other configurations are the same as those of the first embodiment. Hereinafter, only the difference from the first embodiment will be described in the MCM heat exchanger of the fourth embodiment. Then, the same reference numerals will be given to the components having the same configurations as in the first embodiment and a description thereof will be omitted.

In a first MCM heat exchanger 10D of this embodiment, as shown in Figs. 10A to 10C, one cutout 147 is continuously formed in the side portions 142 and 143 of the case 13 and the lid portion 15, and the cutout 147 extends in the circumferential direction of the case 13. The cutout 147 is filled with a filling portion 16B, and the cutout 147 is blocked by the filling portion 16B. The filling portion 16B is in close contact with the upper surface and the side surface of the outer periphery of the assembly 11. The filling portion 16B is formed by injecting a resin material such as an adhesive into the cutout 147 and curing the resin material similarly to the filling portion 16. In this embodiment, since the second passage 112 on three sides is blocked in the assembly 11, the second passage 112 can be more reliably blocked.

### <<Fifth Embodiment>>

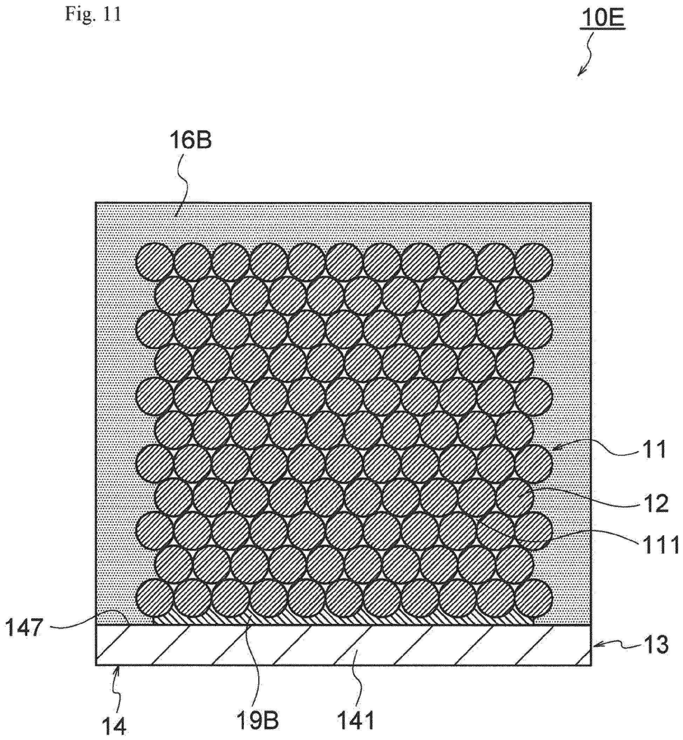

Fig. 11 is a diagram showing a MCM heat exchanger of a fifth embodiment of the invention. This embodiment is different from the fourth embodiment in that an elastic body is interposed between the assembly and the bottom portion of the case, but the other configurations are the same as those of the fourth embodiment. Hereinafter, only the difference from the fourth embodiment will be described in the MCM heat exchanger of the fifth embodiment. Then, the same reference numerals will be given to the components having the same configurations as in the fourth embodiment and a description thereof will be omitted.

A first MCM heat exchanger 10E of this embodiment includes, as shown in Fig. 11, an elastic body 19B interposed between the assembly 11 and the bottom portion 141 of the case 13 similarly to the third embodiment. The elastic body 19B is deformed to follow the lower surface of the outer periphery of the assembly 11 and is in close contact with the entire lower surface of the outer periphery of the assembly 11. In this embodiment, since the second passage 112 on four sides is blocked in the assembly 11, the second passage 112 can be more reliably blocked.

### <<Sixth Embodiment>>

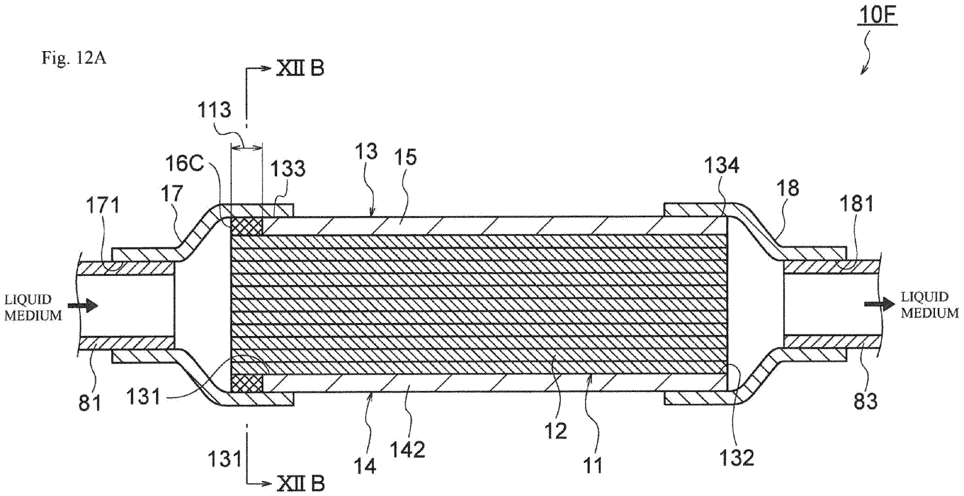

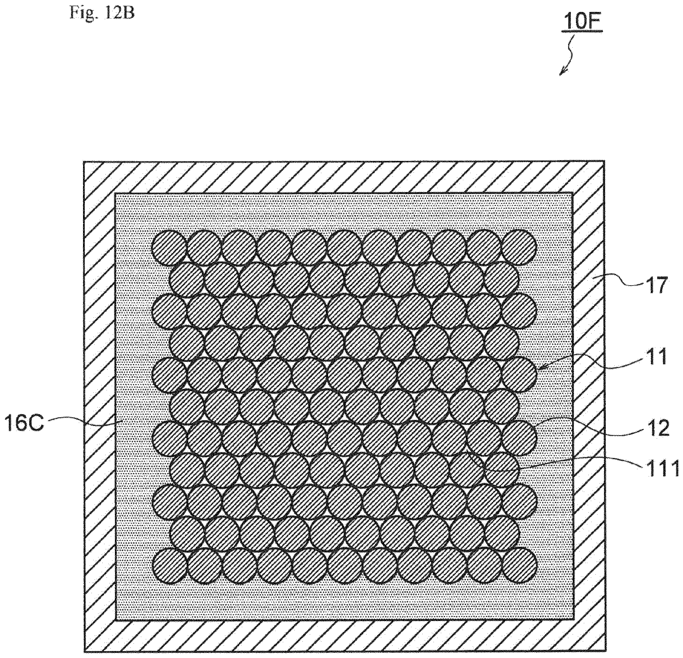

Figs. 12A and 12B are cross-sectional views showing a MCM heat exchanger of a sixth embodiment of the invention. This embodiment is different from the first embodiment in that the case is shorter than the wire instead of the cutout and the first and second MCM heat exchangers include a covering portion instead of the filling portion, but the other configurations are the same as those of the first embodiment. Hereinafter, only the difference from the first embodiment will be described in the MCM heat exchanger of the sixth embodiment. Then, the same reference numerals will be given to the components having the same configurations as in the first embodiment and a description thereof will be omitted.

In this embodiment, as shown in Figs. 12A and 12B, the case 13 is shorter than the assembly 11, and one end portion of the assembly 11 is exposed from the case 13. Then, an exposed portion 113 of the assembly 11 is covered by a covering portion 16C in the entire circumference of the exposed portion 113. The covering portion 16C is formed by applying a resin material such as an adhesive onto the entire circumference of the exposed portion 113 and curing the resin material. The covering portion 16C may be formed by forming, for example, a sheet-like soft urethane resin, rubber, or sponge into an annular elastic body.

The covering portion 16C is in close contact with the entire circumference of the outer periphery of the assembly 11. In this embodiment, since the second passage 112 on four sides is blocked in the assembly 11, the second passage 112 can be more reliably blocked.

In this embodiment, as for the first MCM heat exchanger 10E, since the covering portion 16C is in close contact with the outer periphery of the assembly 11, the second passage 112 formed between the outer periphery of the assembly 11 and the inner surface of the case 13 is blocked by the covering portion 16C so that the resistance of the second passage 112 increases. For this reason, since a large amount of the liquid medium can pass through the first passage 111 formed between the wires 12 of the assembly 11, the heat exchange efficiency can be improved.

Similarly, although particularly not shown in the drawings, as for the second MCM heat exchanger as well, since the covering portion is in close contact with the outer periphery of the assembly 21, the second passage formed between the outer periphery of the assembly 21 and the inner surface of the case 23 is blocked by the filling portion so that the resistance of the second passage increases. For this reason, since a large amount of the liquid medium can pass through the first passage formed between the wires 22 of the assembly 21, the heat exchange efficiency can be improved.

### <<Seventh Embodiment>>

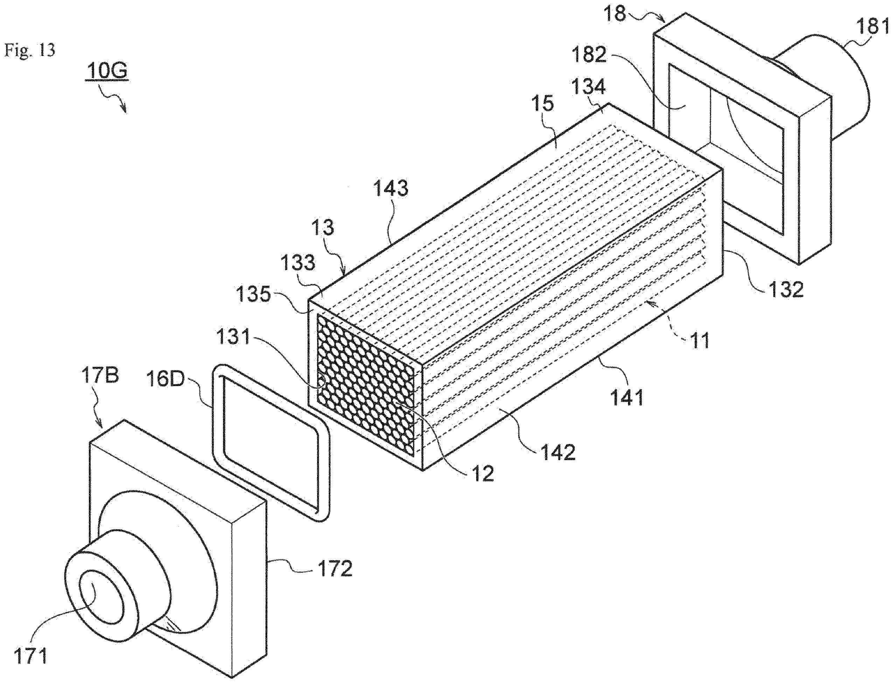

Figs. 13 to 15 are diagrams showing a MCM heat exchanger of a seventh embodiment of the invention. In this embodiment, a blocking member is provided instead of the cutout and the configuration of the first terminal member is different from that of the first embodiment. However, the other configurations are the same as those of the first embodiment. Hereinafter, only the difference from the first embodiment will be described in the MCM heat exchanger of the seventh embodiment. Then, the same reference numerals will be given to the components having the same configurations as in the first embodiment and a description thereof will be omitted.

A first MCM heat exchanger 10G of this embodiment includes, as shown in Figs. 13 to 15, a blocking member 16D that is interposed between the case 13 and the first terminal member 17B in addition to the assembly 11, the case (container) 13, and the terminal members 17B and 18. Further, the case 13 of this embodiment is not provided with the cutouts 145 and 146. The first terminal member 17B of this embodiment corresponds to an example of the terminal member of the invention, and the blocking member 16D of this embodiment corresponds to an example of the blocking member of the invention.

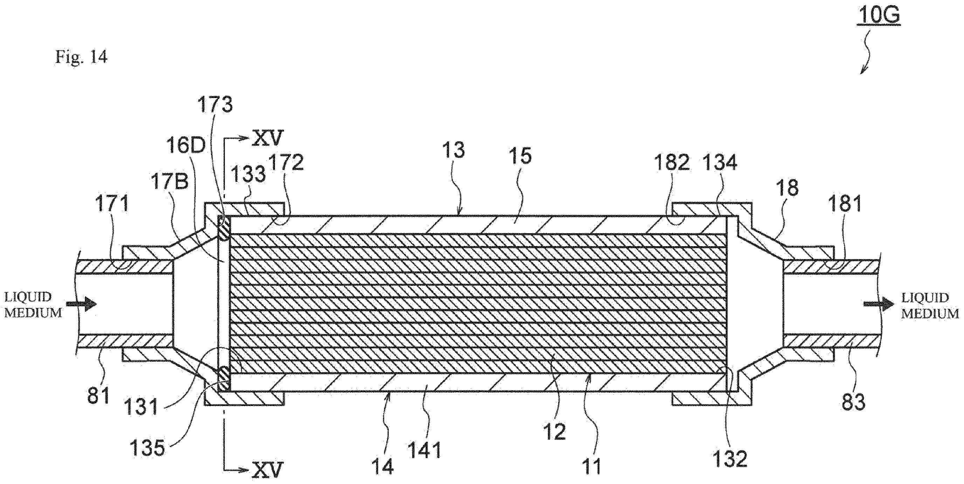

The first terminal member 17B of this embodiment is formed as a resin molded article and includes, as shown in Figs. 13 and 14, a stepped surface 173 interposed between the first connection port 171 and the first connecting port 172. A metal processed article may be used as the first terminal member 17B.

The blocking member 16D is, for example, a rectangular annular O-ring formed of rubber and is interposed between the first terminal member 17B and the case 13. The blocking member 16D is held between the first terminal member 17B and the case 13 while being compressed between the stepped surface 173 of the first terminal member 17B and the end surface 135 of the case 13. The blocking member 16D is not limited to the above-described O-ring as long as the blocking member is formed of an elastic material and has an annular shape corresponding to the shape of the first opening 131 of the case 13.

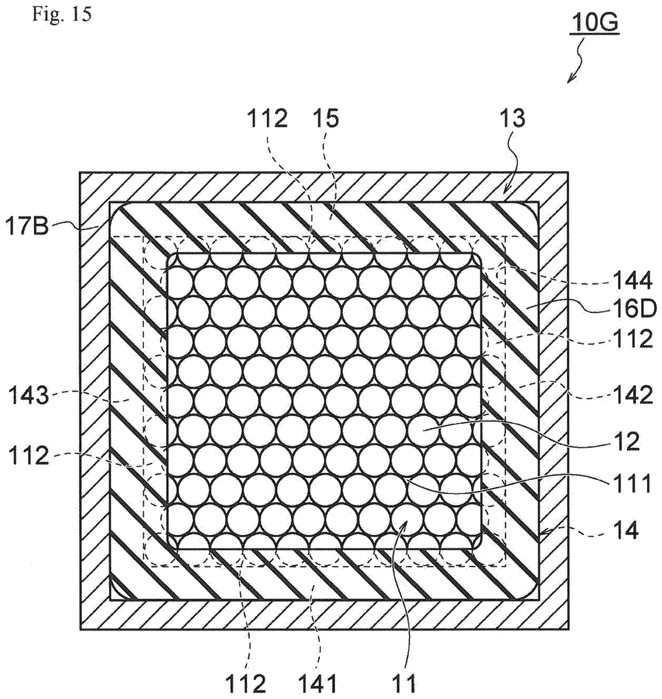

As shown in Fig. 15, the compressed blocking member 16D contacts the entire circumference of the end surface 135 of the case 13 and has a width protruding inward in the radial direction (toward the center of the case 13) in relation to the inner surface of the case 13. The inner periphery of the blocking member 16D is located at the center side in relation to the inner surface of the case 13. Thus, the blocking member 16D partially overlaps the assembly 11 in the axial direction of the case 13 (when viewed from the near side to the far side of the page of Fig. 15) so as to cover the end surface of a part of the assembly 11. As a result, the second passage 112 formed between the inner surface of the case 13 and the outer periphery of the assembly 11 is blocked in the entire circumference by the blocking member 16D.

In this embodiment, the blocking member 16D is not interposed between the second terminal member 18 and the case 13. For that reason, for example, the second terminal member 18 may be formed by a heat shrinkable tube. The above-described blocking member 16D may be interposed between the second terminal member and the case 13. In this case, as the second terminal member, a terminal member having the same configuration as that of the first terminal member 17B with the stepped surface 173 is used.

As described above, in this embodiment, as for the first MCM heat exchanger 10G, the annular blocking member 16D is interposed between the case 13 and the first terminal member 17B, and the second passage 112 is blocked by the blocking member 16D in the entire circumference of the inner surface of the case 13. For this reason, since a large amount of the liquid medium can pass through the first passage 111 formed between the wires 12 of the assembly 11, the heat exchange efficiency can be improved.

Similarly, although particularly not shown in the drawings, as for the second MCM heat exchanger as well, the blocking member is interposed between the case 23 and the first terminal member, and the second passage is blocked by the blocking member in the entire circumference of the inner surface of the case 23. For this reason, since a large amount of the liquid medium can pass through the first passage formed between the wires 22 of the assembly 21, the heat exchange efficiency can be improved.

Further, in this embodiment, as for the first MCM heat exchanger 10G, the longitudinal direction of the wire 12 constituting the assembly 11 (the extending direction of the assembly 11) substantially matches the axial direction of the case 13 (a direction from the first opening 131 toward the second opening 132 in the case 13). For this reason, in this embodiment, it is possible to suppress an increase in pressure loss of the liquid medium flowing in the MCM heat exchanger 10G and to block the second passage 112 just by interposing the blocking member 16D therein.

Similarly, as for the second MCM heat exchanger as well, the longitudinal direction of the wire 22 constituting the assembly (the extending direction of the assembly 21) substantially matches the axial direction of the case 23 (a direction from the first opening toward the second opening in the case 23). For this reason, in this embodiment, it is possible to suppress an increase in pressure loss of the liquid medium flowing in the MCM heat exchanger 20 and to block the second passage just by interposing the blocking member therein.

### <<Eighth Embodiment>>

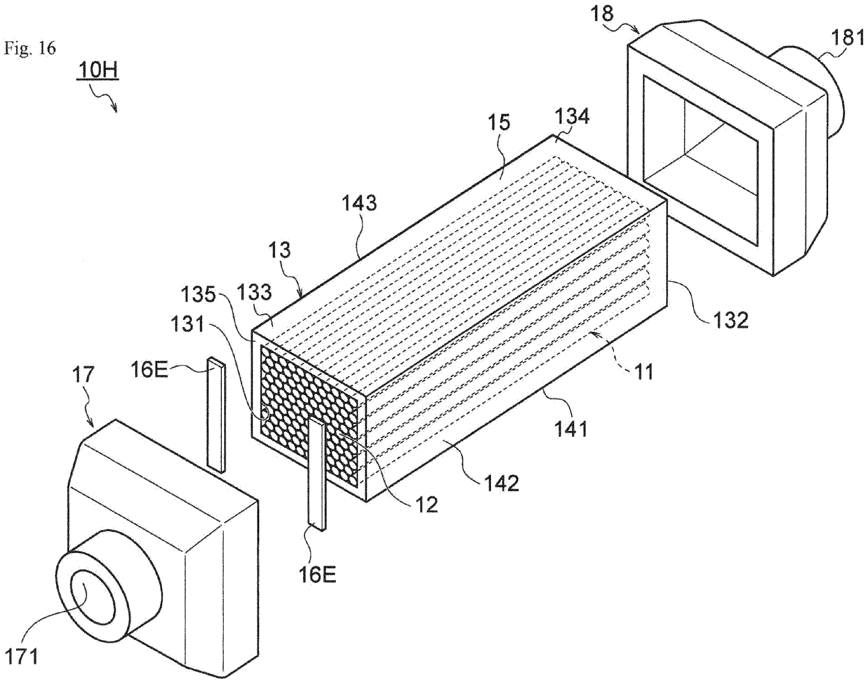

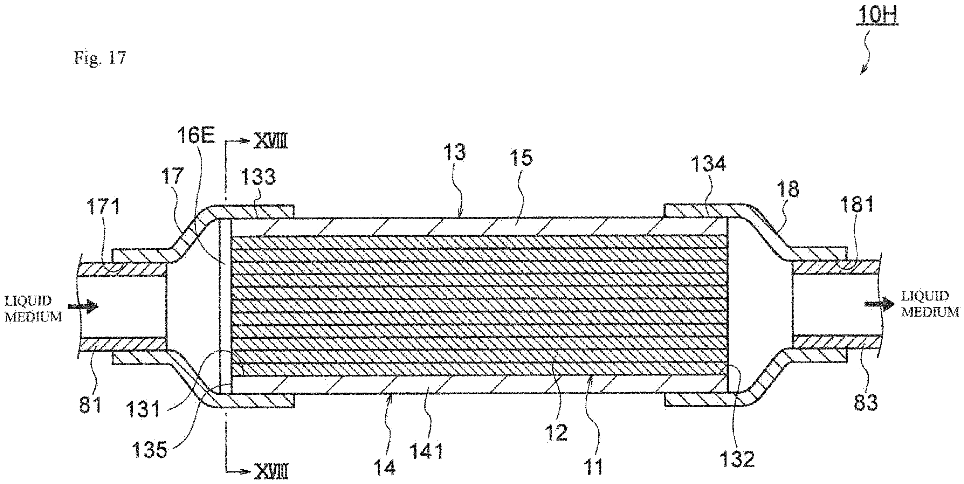

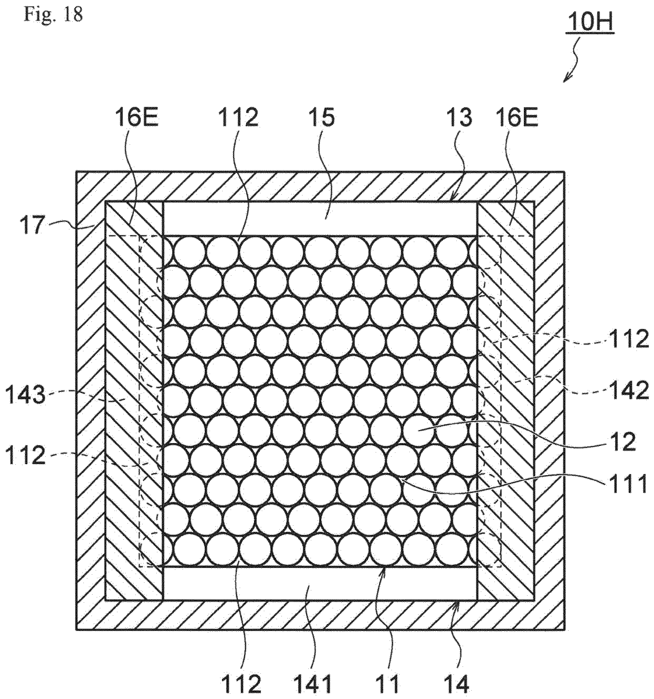

Figs. 16 to 18 are diagrams showing a MCM heat exchanger of an eighth embodiment of the invention. In this embodiment, the shape of the blocking member and the configuration of the first terminal member are different from those of the seventh embodiment, but the other configurations are the same as those of the seventh embodiment. Hereinafter, only the difference from the seventh embodiment will be described in the MCM heat exchanger of the eighth embodiment. Then, the same reference numerals will be given to the components having the same configurations as in the seventh embodiment and a description thereof will be omitted.

A first MCM heat exchanger 10H of this embodiment includes, as shown in Figs. 16 to 18, a blocking member 16E formed as a pair of stripe-shaped plate members instead of the blocking member 16D formed as an O-ring. The blocking member 16E is not an elastic body and is formed as a rigid body formed of a highly rigid material such as resin or metal. The blocking member 16E of this embodiment corresponds to an example of the blocking member of the invention.

The blocking member 16E is fixed to one end portion of the case 13 by, for example, adhering or the like and contacts the end surface 135 of the case 13 (mainly the end surfaces of the side portions 142 and 143). The blocking member 16E has a width protruding toward the opposite side blocking member 16E in relation to the inner surface of the case 13 and partially overlaps the assembly 11 in the axial direction of the case 13 so as to cover the end surface of a part of the assembly 11. As a result, the blocking member 16E blocks the second passage 112 between the side portions 142 and 143 of the case 13 and the side surface of the outer periphery of the assembly 11.

In this embodiment, since the blocking member 16E is fixed to the end surface 135 of the case 13, the blocking member 16E is not pinched between the first terminal member 17 and the case 13. In this way, in this embodiment, since there is no need to press a plate member 18B by the first terminal member 16B, the first terminal member 17 is formed as a heat shrinkable tube similarly to the first embodiment. The first terminal member 17 may be formed as, for example, a resin molded article or a metal processed article.

Instead of the first terminal member 17, the blocking member 16E may be pinched between the first terminal member 17B and the case 13 by using the first terminal member 17B with the stepped surface 173. In this case, the blocking member 16E may not be fixed to one end portion of the case 13.

Alternatively, in a case in which the blocking member 16E is pinched between the stepped surface 173 of the first terminal member 17B and the end surface 135 of the case 13, the blocking member 16E is formed as an elastic body and the blocking member 16E may be held between the first terminal member 17B and the case 13 while the blocking member 16E is compressed between the stepped surface 173 of the first terminal member 17B and the end surface 135 of the case 13.

In this embodiment, as for the first MCM heat exchanger 10H, the stripe-shaped blocking member 16E is interposed between the case 13 and the first terminal member 17, and the second passage 112 between the side surface of the outer periphery of the assembly 11 and the side portions 142 and 143 of the case 13 is blocked by the blocking member 16E. For this reason, since a large amount of the liquid medium can pass through the first passage 111 formed between the wires 12 of the assembly 11, the heat exchange efficiency can be improved.

Here, as described above, in a case in which the assembly 11 is formed by overlapping the wires 12 inside the accommodation portion 14 of the case 13 in the vertical direction, the wires 12 are aligned by the lid portion 15 or the bottom portion 141 of the case 13, and thus the second passage 112 adjacent to the side portions 142 and 143 tends to be wider than the second passage 112 adjacent to the bottom portion 141 or the lid portion 15. On the contrary, in this embodiment, since only the second passage 112 adjacent to the side portions 142 and 143 is blocked by the stripe-shaped blocking member 16E, the above-described effect can be efficiently obtained.

Similarly, although particularly not shown in the drawings, as for the second MCM heat exchanger as well, the stripe-shaped blocking member is interposed between the case 23 and the first terminal member, and the second passage between the side surface of the outer periphery of the assembly 21 and the side portion of the case 23 is blocked by the blocking member. For this reason, since a large amount of the liquid medium can pass through the first passage formed between the wires 22 of the assembly 21, the heat exchange efficiency can be improved.

Although particularly not shown in the drawings, a frame-shaped blocking member formed of a rigid body may be fixed to the end surface 135 of the case 13 instead of the stripe-shaped blocking member 16E. By the blocking member, the second passage 112 can be blocked in the entire circumference of the inner surface of the case 13, and thus the second passage 112 can be more reliably blocked.

### <<Ninth Embodiment>>

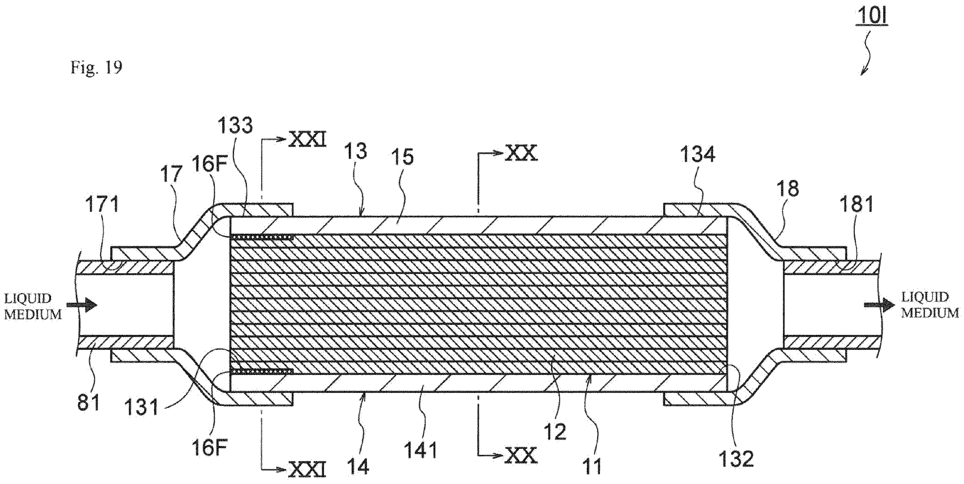

Figs. 19 to 21 are diagrams showing a MCM heat exchanger of a ninth embodiment of the invention. This embodiment is different from the first embodiment in that the case is not provided with the cutout and the filling portion is provided at the end portion of the case, but the other configurations are the same as those of the first embodiment. Hereinafter, only the difference from the first embodiment will be described in the MCM heat exchanger of the ninth embodiment. Then, the same reference numerals will be given to the components having the same configurations as in the first embodiment and a description thereof will be omitted.

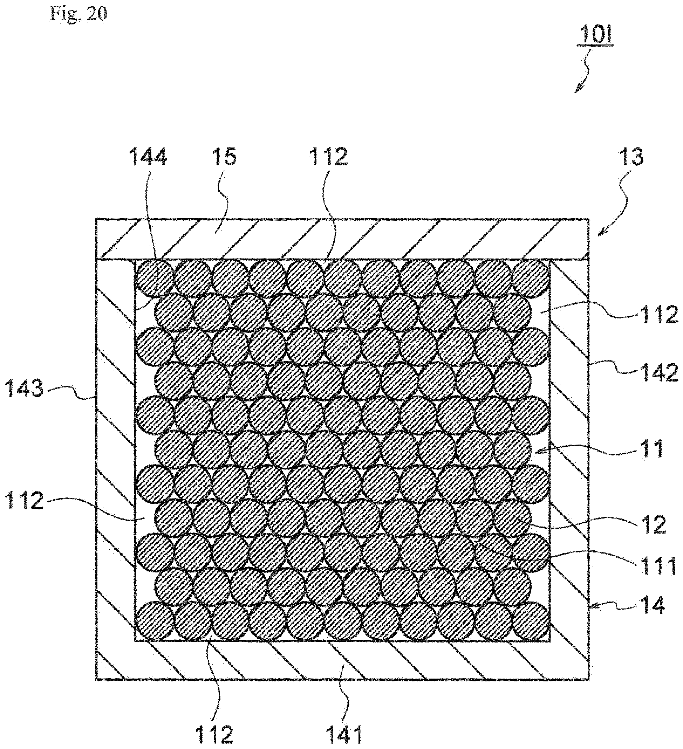

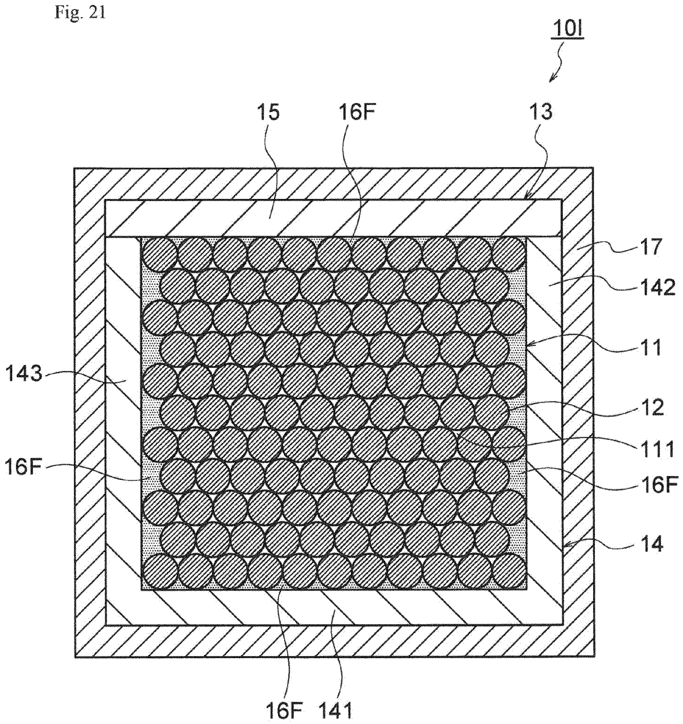

In this embodiment, as shown in Figs. 19 and 21, a filling portion 16F is filled in the second passage 112 (see Fig. 20) of the first end portion 133 of the case 13, and the second passage 112 is blocked by the filling portion 16F. The case 13 of this embodiment is not provided with the cutouts 145 and 146. The filling portion 16F is formed by injecting a resin material such as an adhesive into the second passage 112 through the first opening 131 of the case 13 using, for example, a dispenser or the like and curing the resin material.

Although particularly not shown in the drawings, the filling portion 16F may be filled into the second passage 112 in the second end portion 134 of the case 13 instead of the first end portion 133 of the case 13. Alternatively, the filling portion 16F may be filled into the second passage 112 at both end portions 133 and 134 of the case 13. The end portions 133 and 134 of the case 13 of this embodiment correspond to an example of the end portion of the case of the invention, and the second passage 112 of this embodiment corresponds to an example of the gap of the invention.

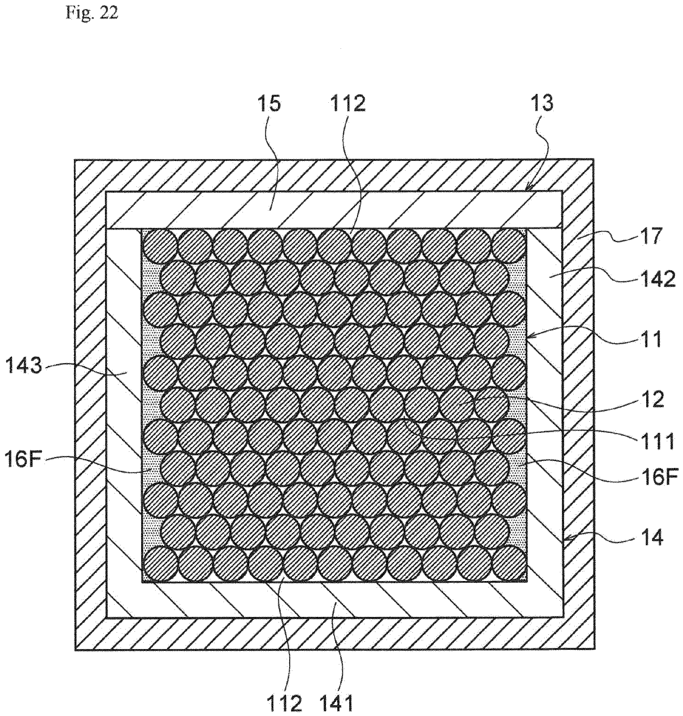

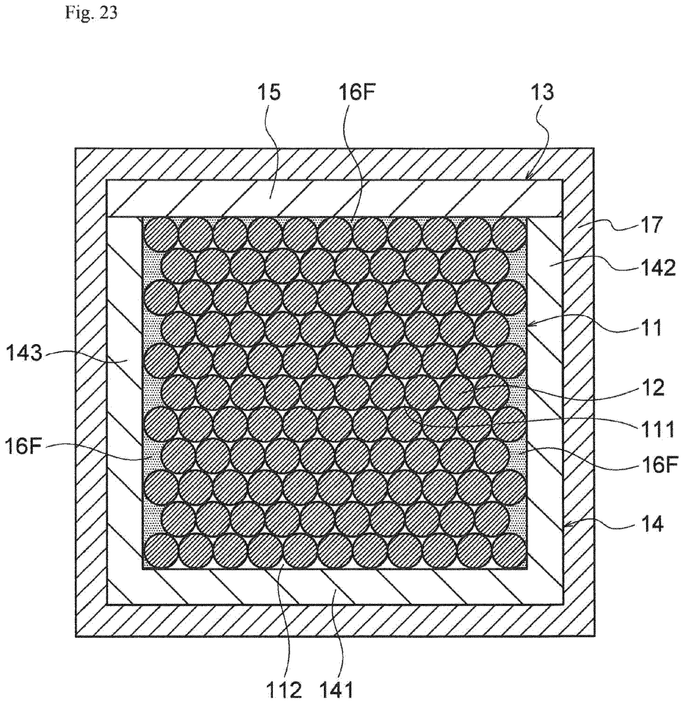

Further, in the example shown in Fig. 21, the filling portion 16F is formed in the entire circumference of the inner surface of the case 13, but the invention is not particularly limited thereto. Fig. 22 is a cross-sectional view showing a modified example of the MCM heat exchanger of this embodiment, and Fig. 23 is a cross-sectional view showing another modified example of the MCM heat exchanger of this embodiment. Figs. 22 and 23 are cross-sectional views in which the MCM heat exchanger is cut along the width direction.

For example, as shown in Fig. 22, the filling portion 16F may be filled only into the second passage 112 between the side portions 142 and 143 of the case 13 and the outer periphery of the assembly 11. Alternatively, as shown in Fig. 23, the filling portion 16F may be filled into the second passage 112 among the side portions 142 and 143 of the case 13, the lid portion 15, and the outer periphery of the assembly 11 except for the bottom portion 141.

Here, as described above, in a case in which the assembly 11 is formed by overlapping the wires 12 inside the accommodation portion 14 of the case 13 in the vertical direction, the wires 12 are aligned by the bottom portion 141 of the case 13. Accordingly, the second passage 112 adjacent to the lid portion 15 or the second passage 112 adjacent to the side portions 142 and 143 tends to be wider than the second passage 112 adjacent to the bottom portion 141. On the contrary, in the example shown in Fig. 22 or 23, since only the second passage 112 adjacent to the lid portion 15 or the second passage 112 adjacent to the side portions 142 and 143 is blocked by the filling portion 16F, the above-described effect can be efficiently obtained.

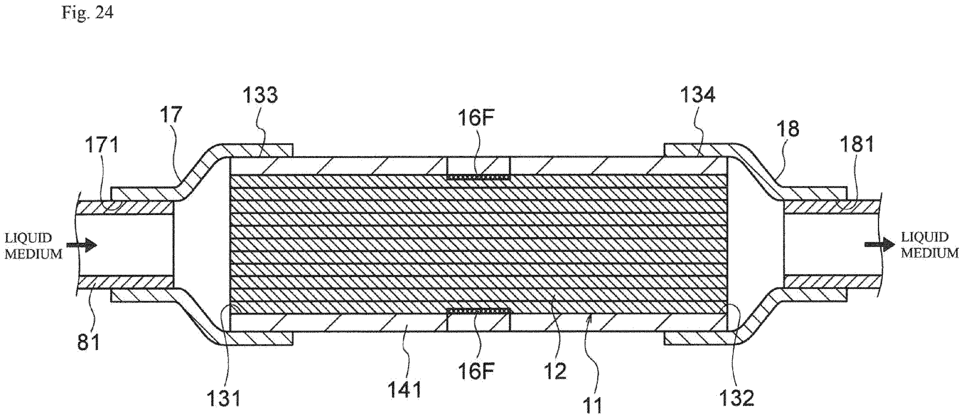

Further, a position in which the second passage 112 is blocked by the filling portion 16F in the longitudinal direction of the case 13 is not particularly limited to the end portions 133 and 134 of the case 13. Fig. 24 is a cross-sectional view showing a still another modified example of the MCM heat exchanger of this embodiment and is a cross-sectional view in which the MCM heat exchanger is cut along the longitudinal direction.

For example, as shown in Fig. 24, the second passage 112 may be blocked by the filling portion 16F at the substantially center of the case 13. In this case, for example, the filling portion 16F can be formed by hollowing out the center portion of the case 13 in the longitudinal direction once, applying an adhesive to the outer periphery of the assembly 11 through the opening, and fitting and fixing the hollowed portion to the opening before the adhesive is cured.

As described above, in this embodiment, as for the first MCM heat exchanger 101, the second passage 112 formed between the outer periphery of the assembly 11 and the inner surface of the case 13 in the first end portion 133 of the case 13 is blocked by the filling portion 16F so that the resistance of the second passage 112 increases. For this reason, since a large amount of the liquid medium can pass through the first passage 111 formed between the wires 12 of the assembly 11, the heat exchange efficiency can be improved.

Similarly, although particularly not shown in the drawings, as for the second MCM heat exchanger as well, the second passage formed between the outer periphery of the assembly 21 and the inner surface of the case 23 in the first end portion of the case 23 is blocked by the filling portion so that the resistance of the second passage increases. For this reason, since a large amount of the liquid medium can pass through the first passage formed between the wires 22 of the assembly 21, the heat exchange efficiency can be improved.

Further, in this embodiment, as for the first MCM heat exchanger 101, the longitudinal direction of the wire 12 constituting the assembly 11 (the extending direction of the assembly 11) substantially matches the axial direction of the case 13 (a direction from the first opening 131 toward the second opening 132 in the case 13). For this reason, in this embodiment, it is possible to suppress an increase in pressure loss of the liquid medium flowing in the MCM heat exchanger 10I and to increase the resistance of the second passage 112 just by filling the second passage 112 with the filling portion 16F.

Similarly, as for the second MCM heat exchanger as well, the longitudinal direction of the wire 22 constituting the assembly 21 (the extending direction of the assembly 21) substantially matches the axial direction of the case 23 (a direction from the first opening toward the second opening in the case 23). For this reason, in this embodiment, it is possible to suppress an increase in pressure loss of the liquid medium flowing in the MCM heat exchanger 20 and to increase the resistance of the second passage just by filling the second passage with the filling portion.

### <<Tenth Embodiment>>

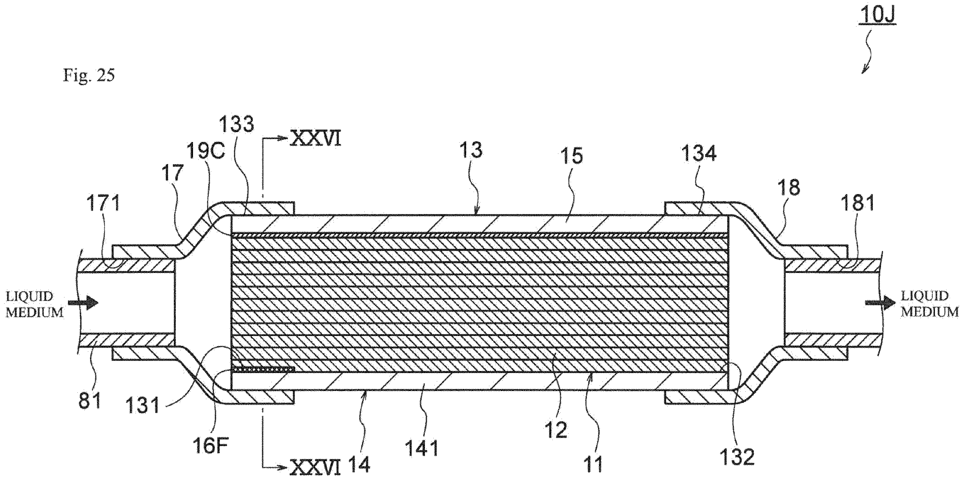

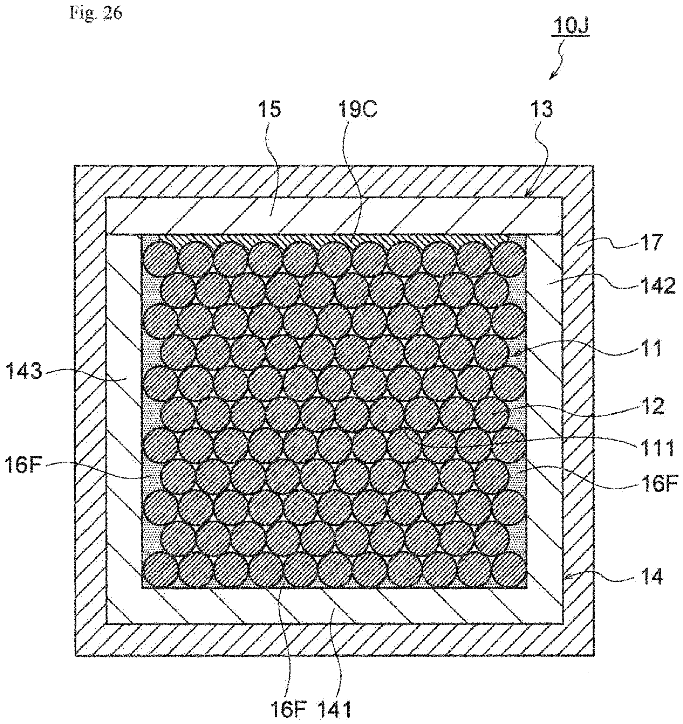

Figs. 25 and 26 are cross-sectional views showing a MCM heat exchanger of a tenth embodiment of the invention. This embodiment is different from the ninth embodiment in that the first and second MCM heat exchangers include an elastic body instead of a part of the filling portion, but the other configurations are the same as those of the ninth embodiment. Hereinafter, only the difference from the ninth embodiment will be described in the MCM heat exchanger of the tenth embodiment. Then, the same reference numerals will be given to the components having the same configurations as in the ninth embodiment and a description thereof will be omitted.

A first MCM heat exchanger 10J of this embodiment includes, as shown in Figs. 25 and 26, an elastic body 19C instead of the filling portion 16F filled in the second passage 112 adjacent to the lid portion 15 of the case 13. The elastic body 19C is interposed between the lid portion 15 of the case 13 and the assembly 11 and is deformed to follow the upper surface of the outer periphery of the assembly 11 so that the elastic body is in close contact with the entire upper surface of the outer periphery of the assembly 11. As a detailed example of such an elastic body 19C, for example, a sheet-like flexible urethane resin, rubber, or sponge can be exemplified.

Further, the elastic body 19C is formed in the entire area along the longitudinal direction of the case 13. For this reason, it is possible to suppress the partial floating of the wire 12.

In the example shown in Figs. 25 and 26, the filling portion 16F is filled in the second passage 112 between the bottom portion 141 and the side portions 142 and 143 of the case 13 and the outer periphery of the assembly 11 except for the lid portion 15, but a position in which the filling portion 16F is disposed inside the case 13 is not particularly limited.

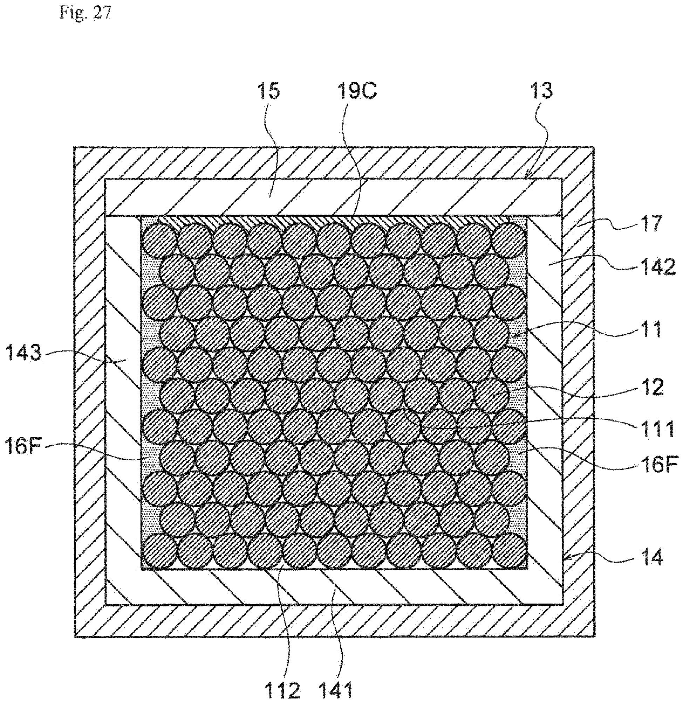

Fig. 27 is a cross-sectional view showing a modified example of the MCM heat exchanger. For example, as shown in Fig. 27, the filling portion 16F may be filled only into the second passage 112 between the side portions 142 and 143 of the case 13 and the outer periphery of the assembly 11.

Further, in the example shown in Figs. 25 and 26, the elastic body 19C is interposed between the lid portion 15 of the case 13 and the assembly 11, but a position in which the elastic body 19C is disposed inside the case 13 is not particularly limited.

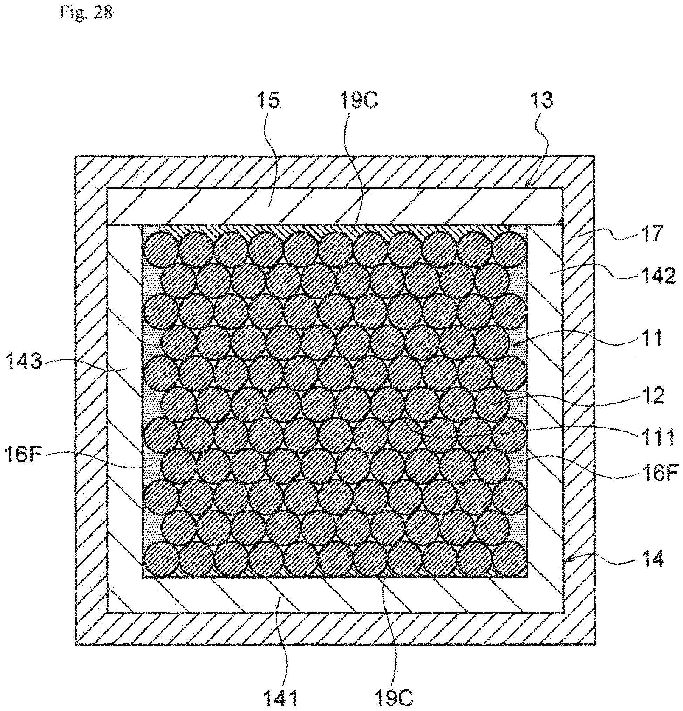

Fig. 28 is a cross-sectional view showing another modified example of the MCM heat exchanger. For example, as shown in Fig. 28, the elastic body 19C may be also interposed between the bottom portion 141 of the case 13 and the assembly 11. The elastic body 19C is deformed to follow the lower surface of the outer periphery of the assembly 11 and is in close contact with the entire lower surface of the outer periphery of the assembly 11. Although particularly not shown in the drawings, the lower elastic body 19C is also formed in the entire area along the longitudinal direction of the case 13. For this reason, it is possible to suppress the partial floating of the wire 12.

As described above, in this embodiment, as for the first MCM heat exchanger 10J, the second passage 112 formed between the outer periphery of the assembly 11 and the inner surface of the case 13 in the first end portion 133 of the case 13 is blocked by the filling portion 16F and the elastic body 19C so that the resistance of the second passage 112 increases. For this reason, since a large amount of the liquid medium can pass through the first passage 111 formed between the wires 12 of the assembly 11, the heat exchange efficiency can be improved.

Similarly, although particularly not shown in the drawings, as for the second MCM heat exchanger as well, the second passage formed between the outer periphery of the assembly 21 and the inner surface of the case 23 in the first end portion of the case 23 is blocked by the filling portion and the elastic body so that the resistance of the second passage increases. For this reason, since a large amount of the liquid medium can pass through the first passage formed between the wires 22 of the assembly 21, the heat exchange efficiency can be improved.

Embodiments heretofore explained are described to facilitate understanding of the present invention and are not described to limit the present invention. It is therefore intended that the elements disclosed in the above embodiments include all design changes and equivalents to fall within the technical scope of the present invention.

The configuration of the above-described magnetic heat pump device is an example, and the heat exchanger according to the invention may be applied to another magnetic heat pump device of an AMR (Active Magnetic Refrigeration) type.

For example, the magnetic heat pump device may include one MCM heat exchanger, a magnetic field changer configured to apply a magnetic field to the MCM and change the magnitude of the magnetic field, first and second external heat exchangers respectively connected to the MCM heat exchanger through a pipe, and a fluid supplier configured to supply a fluid from the MCM heat exchanger to the first or second external heat exchangers in synchronization with the operation of the magnetic field changer.

Further, in the above-described embodiment, an example in which the magnetic heat pump device is applied to the air conditioner for home or an automobile has been described, but the invention is not particularly limited thereto. For example, when an MCM having an appropriate Curie temperature according to the application is selected, the magnetic heat pump device according to the invention may be used for an application in an extremely low temperature range such as a refrigerator or in a high temperature range to some extent.

Further, in this embodiment, the first and second MCM heat exchangers 10 and 20 have the same configurations, but the invention is not particularly limited thereto. Here, the heat exchangers may have different configurations. For example, the first and second MCM heat exchangers 10 and 20 may use wires having different wire diameters. Further, the twisting methods, the twisting directions, or the twisting pitches of the plurality of wires may be different from each other.

Further, in this embodiment, the MCM heat exchanger includes a single assembly, but the invention is not particularly limited thereto. For example, a plurality of assemblies may be arranged in series along the extending direction of the MCM heat exchanger. In this case, the plurality of assemblies may have the same configurations or different configurations.

When the magnetic heat pump device is continuously used, the MCM heat exchanger has a temperature gradient in which a temperature is high at the connection side to the high temperature side pipe and a temperature is low at the connection side to the low temperature side pipe. For this reason, in the above-described example, the wires constituting the assembly located at the high temperature side among the plurality of assemblies arranged in series are desirably composed of a material having a relatively high Curie point (Curie temperature), and the wires constituting the assembly located at the low temperature side are desirably composed of a material having a relatively low Curie point. In this way, when the wires composed of materials having different Curie points are used in response to the temperature atmosphere in the MCM heat exchanger, the magnetocaloric effect can be exhibited with higher efficiency.

### EXPLANATIONS OF LETTERS OR NUMERALS

1: magnetic heat pump device
10 to 10J: first MCM heat exchanger
11: assembly
111: first passage
112: second passage
113: exposed portion
12: wire
13 to 13d: case
131: first opening
132: second opening
133: first end portion
134: second end portion
135: end surface
14: accommodation portion
141 to 141d: bottom portion
142 to 142d, 143 to 143d: side portion
144: opening
145, 146, 147: cutout
15 to 15d: lid portion
16, 16B, 16F: filling portion
16C: covering portion
16D, 16E: blocking member
17, 17B: first terminal member
171: first connection port
172: first connecting port
173: stepped surface
18: second terminal member
181: second connection port
182: second connecting port
19A, 19B, 19C: elastic body
20: second MCM heat exchanger
21: assembly
22: wire
23: case
271: first connection port
281: second connection port
30: piston
35: actuator
40: permanent magnet
50: low temperature side heat exchanger
60: high temperature side heat exchanger
70: pump
81 to 82: first and second low temperature side pipes
83 to 84: third and fourth high temperature side pipes
90: switching valve

## Claims

1. A heat exchanger to be used in a magnetic heat pump device, the heat exchanger comprising:
an assembly which is formed by bundling wires;
a case which accommodates the assembly and is provided with at least one cutout; and
a filling portion which is filled in the cutout, wherein
each of the wires is formed of a magnetocaloric material having a magnetocaloric effect, and
the filling portion is in close contact with an outer periphery of the assembly.

2. The heat exchanger according to claim 1, wherein
the case includes a pair of side portions, and
the cutout is formed at each of the side portions.

3. The heat exchanger according to claim 2, wherein
the case includes a pair of connection portions connecting end portions of the pair of side portions, and
the heat exchanger includes an elastic body which is interposed between at least one of the connection portions and the assembly and is in close contact with the outer periphery of the assembly.

4. The heat exchanger according to claim 2, wherein
the case includes:
a pair of side portions; and
a pair of connection portions connecting end portions of the pair of side portions, and
the cutout is continuously formed in one of the side portions, one of the connection portions, and other of the side portions.

5. The heat exchanger according to claim 4, wherein
the heat exchanger includes an elastic body which is interposed between other of the connection portions and the assembly and is in close contact with the outer periphery of the assembly.

6. The heat exchanger according to claim 3 or 5, wherein
the elastic body is provided in an entire area along a longitudinal direction of the case.

7. A heat exchanger to be used in a magnetic heat pump device, the heat exchanger comprising:
an assembly which is formed by bundling wires;
a case which accommodates the assembly and is shorter than the assembly; and
a covering portion which covers a portion exposed from the case in the assembly, wherein
each of the wires is formed of a magnetocaloric material having a magnetocaloric effect, and
the covering portion is in close contact with an outer periphery of the assembly.

8. A heat exchanger to be used in a magnetic heat pump device, the heat exchanger comprising:
an assembly which is formed by bundling wires;
a case which accommodates the assembly; and
a blocking member which contacts an end surface of the case and overlaps a part of the assembly in an axial direction of the case, wherein
each of the wires is formed of a magnetocaloric material having a magnetocaloric effect, and
the blocking member blocks at least a part of a gap formed between an inner surface of the case and an outer periphery of the assembly.

9. The heat exchanger according to claim 8, wherein
the case includes a pair of side portions, and
the blocking member blocks at least a gap between the side portions and the outer periphery of the assembly.

10. The heat exchanger according to claim 8 or 9, wherein
the blocking member has an annular shape corresponding to a shape of an opening of an end portion of the case, and
the blocking member blocks a gap in an entire circumference of the inner surface of the case.

11. The heat exchanger according to any one of claims 8 to 10, wherein
the heat exchanger includes a terminal member attached to an end portion of the case,
the blocking member is formed of an elastic body, and
the blocking member is interposed between the terminal member and the case.

12. A heat exchanger to be used in a magnetic heat pump device, the heat exchanger comprising:
an assembly which is formed by bundling wires;
a case which accommodates the assembly; and
a filling portion which is filled in at least a part of a gap formed between an outer periphery of the assembly and an inner surface of the case, wherein
each of the wires is formed of a magnetocaloric material having a magnetocaloric effect.

13. The heat exchanger according to claim 12, wherein
the filling portion is provided in at least one end portion of the case.

14. The heat exchanger according to claim 12, wherein
the case includes a pair of side portions, and
the filling portion is filled in a gap between the outer periphery of the assembly and the side portions.

15. The heat exchanger according to claim 14, wherein
the case includes a pair of connection portions connecting end portions of the pair of side portions, and
the filling portion is also filled in a gap between at least one of the connection portions and the outer periphery of the assembly.

16. The heat exchanger according to any one of claims 13 to 15, wherein
the filling portion is filled in a gap in an entire circumference of the inner surface of the case.

17. The heat exchanger according to any one of claims 12 to 14, wherein
the case includes a pair of connection portions connecting end portions of the pair of side portions, and
the heat exchanger includes an elastic body which is interposed between at least one of the connection portions and the assembly and is in close contact with the outer periphery of the assembly.

18. The heat exchanger according to claim 17, wherein
the elastic body is interposed between one of the connection portions and the assembly, and
the filling portion is also filled in a gap between other of the connection portions and the outer periphery of the assembly.

19. The heat exchanger according to claim 17 or 18, wherein
the elastic body is provided in an entire area along a longitudinal direction of the case.

20. The heat exchanger according to any one of claims 1 to 19, wherein
the case includes:
a first opening located at one end portion; and
a second opening located at the other end portion, and
a direction from the first opening toward the second opening substantially matches an extending direction of the assembly.

21. A magnetic heat pump device comprising:
the heat exchanger according to any one of claims 1 to 20;
a magnetic field changer configured to apply a magnetic field to the magnetocaloric material and change the magnitude of the magnetic field;
first and second external heat exchangers respectively connected to the heat exchanger through a pipe; and
a fluid supplier configured to supply a fluid from the heat exchanger to the first or second external heat exchanger in synchronization with the operation of the magnetic field changer.
